# EUROPEAN PATENT APPLICATION

(11) **EP 4 834 057 A1**
(43) Date of publication of application: **04.11.2026**
(21) Application number: 24912197.1
(22) Date of filing: 29.11.2024
(51) Int. Cl.: A01B 63/00

(54) **INFORMATION DISPLAY SYSTEM AND WORK VEHICLE**

(30) Priority: 27.12.2023 JP 2023222038; 27.12.2023 JP 2023222037
(71) Applicant: KUBOTA CORPORATION, Osaka-shi, Osaka 556-8601 (JP)
(72) Inventor: OHARA, Shinji, Sakai-shi, Osaka 590-0908 (JP); HIRAISHI, Yoichi, Sakai-shi, Osaka 590-0908 (JP)
(74) Representative: Cabinet Beau de Loménie
(86) International application number: PCT/JP2024/042335
(87) International publication number: WO 2025/142307

(57) **Abstract**

An information display system for a work vehicle including a coupling device to connect an implement is disclosed. The information display system includes a digital display and a control device to control the digital display. The control device causes the digital display to display a setting screen relating to the coupling device in response to an operation of an operating tool to adjust a state of the coupling device.

## Description

### TECHNICAL FIELD

The present disclosure relates to information display systems and work vehicles.

### BACKGROUND ART

Research and development of smart agriculture that uses information and communication technology (ICT) and the Internet of things (IoT), as the next-generation agriculture, is under way. Automated and unmanned operations of agricultural machines such as tractors used in fields have been studied and developed. For example, work vehicles that travel while performing automatic steering, using a positioning system such as a global navigation satellite system (GNSS) that can perform precise positioning, have been put into practice.

A meter panel unit that displays and notifies an operator of a travel speed, an engine load state, and the state of each portion of a work vehicle is provided in front of the operator's seat of an agricultural work vehicle such as a tractor.

Patent Document 1 describes a commonly used meter unit for passenger cars.

### CITATION LIST

### PATENT LITERATURE

Patent Document No. 1: Japanese Laid-Open Patent Publication No. 2012-32209

### SUMMARY OF INVENTION

### TECHNICAL PROBLEM

A meter panel provided in an agricultural machine such as a tractor is required to accurately notify the operator of various kinds of information about the vehicle when the vehicle is traveling or working. In addition, it is necessary to display more kinds of information in order to allow such an agricultural machine to perform various kinds of work outdoors compared to general passenger cars. In the case in which an agricultural machine is used in smart agriculture, even more kinds of information need to be displayed. However, as the amount of information displayed on the meter panel increases, visibility decreases, and therefore, it is more difficult for the operator to obtain necessary information.

Also, an increased demand for such a meter panel and other display devices is not only for agricultural machines but also for construction machines that are used in work in construction sites. Agricultural machines and construction machines that can travel are hereinafter collectively referred to as "work vehicles."

Various implements (work machines) may be connected to the front or rear of a work vehicle for performing desired work. There is a demand for systems that allow various settings related to an implement, or adjustments to the position or orientation of an implement, to be performed more easily.

The present disclosure provides information display systems and work vehicles capable of solving such a problem.

### SOLUTION TO PROBLEM

The present disclosure provides solutions described in the following aspects.

### [Item 1]

An information display system for a work vehicle including a coupling device to connect an implement, the information display system comprising:
a digital display; and
a control device configured to control the digital display;
wherein the control device is configured to cause the digital display to display a setting screen relating to the coupling device in response to an operation of an operating tool to adjust a state of the coupling device.

### [Item 2]

The information display system of Item 1, wherein
the coupling device includes a three-point hitch, and
the control device is configured to, in response to an operation of an operating tool to adjust a height of the three-point hitch, cause the digital display to display a setting screen relating to the three-point hitch.

### [Item 3]

The information display system of Item 1 or 2, wherein
the coupling device includes a PTO shaft, and
the control device is configured to, in response to an operation of an operating tool to switch rotation of the PTO shaft between on and off, cause the digital display to display a setting screen relating to the PTO shaft.

### [Item 4]

The information display system of Item 2, wherein the setting screen includes a display region for setting a height of the three-point hitch when an implement attached to the three-point hitch is in contact with the ground.

### [Item 5]

The information display system of Item 2 or 4, wherein the setting screen includes a display region for setting a height of the three-point hitch when the work vehicle performs work using an implement attached to the three-point hitch.

### [Item 6]

The information display system of any one of Items 2, 4, and 5, wherein the setting screen includes a display region for setting a height of the three-point hitch when an implement is attached to or detached from the three-point hitch.

### [Item 7]

The information display system of any one of Items 2 and 4 to 6, wherein the control device is further configured to cause information indicating a current height of the three-point hitch to be displayed in the setting screen.

### [Item 8]

The information display system of any one of Items 2 and 4 to 7, wherein
the coupling device includes a PTO shaft, and
the setting screen includes a display region for setting at least one of: a first height in a function of automatically turning off the PTO shaft when the height of the three-point hitch exceeds the first height when the work vehicle turns while the PTO shaft is on; or a second height in a function of automatically turning on the PTO shaft when the height of the three-point hitch falls below the second height when the work vehicle is turning while the PTO shaft is off.

### [Item 9]

The information display system of Item 3, wherein the setting screen includes a display region for setting a rotation speed of the PTO shaft when the PTO shaft is on.

### [Item 10]

The information display system of any one of Items 1 to 9, wherein the control device is configured to:
cause information relating to a travel state including a gear stage and a travel speed of the work vehicle to be displayed in a first region of the digital display;
cause other information different from the information relating to the travel state to be displayed in a second region of the digital display; and
cause the setting screen to be displayed in the second region while maintaining display in the first region in response to the operation.

### [Item 11]

The information display system of Item 10, wherein the first region is a band-shaped region extending in a horizontal direction, and the second region is positioned below the first region.

### [Item 12]

The information display system of any one of Items 1 to 11, further comprising a meter panel unit including the digital display and one or more analog meters.

### [Item 13]

A work vehicle comprising the information display system of any one of Items 1 to 12.

### [Item 14]

An information display system for a work vehicle including a coupling device to connect an implement, the information display system comprising:
a digital display; and
a control device configured to control the digital display and the coupling device;
wherein the control device is configured to:
   cause the digital display to display a setting screen including a display region for setting a height of the coupling device and a button to activate the setting; and
   cause the height of the coupling device to become the set height in response to an operation of selecting the button.

### [Item 15]

The information display system of Item 14, wherein the control device is configured to:
cause the digital display to display a corresponding setting screen for each of a plurality of types of implements;
store the height of the implement set in each of the setting screens; and
in each setting screen, cause the height of the coupling device to become the set height in response to an operation of selecting the button.

### [Item 16]

The information display system of Item 14 or 15, wherein
the setting screen includes a first display region for setting a height of the coupling device during work, a first button to activate a setting in the first display region, a second display region for setting a height of the coupling device when the implement is attached to or detached from the coupling device, and a second button to activate a setting in the second display region; and
the control device is configured to cause the height of the coupling device to become the height set in the first display region in response to an operation of selecting the first button, and cause the height of the coupling device to become the height set in the second display region in response to an operation of selecting the second button.

### [Item 17]

The information display system of any one of Items 14 to 16, wherein the control device is further configured to cause information indicating a current height of the coupling device to be displayed in the setting screen.

### [Item 18]

The information display system of any one of Items 14 to 17, wherein the coupling device is a three-point hitch.

### [Item 19]

The information display system of any one of items 14 to 18, wherein the control device is configured to:
cause information relating to a travel state including a gear stage and a travel speed of the work vehicle to be displayed in a first region of the digital display;
cause other information different from the information relating to the travel state to be displayed in a second region of the digital display; and
cause the setting screen to be displayed in the second region while maintaining display in the first region in response to an operation of an operating tool for operating the coupling device.

[Item 20]

The information display system of item 19, wherein
the first region is a band-shaped region extending in a horizontal direction, and
the second region is positioned below the first region.

### [Item 21]

The information display system of any one of items 14 to 20, further comprising a meter panel unit including the digital display and one or more analog meters.

### [Item 22]

A work vehicle comprising the information display system of any one of items 14 to 21.

### ADVANTAGEOUS EFFECTS OF INVENTION

According to embodiments of the present disclosure, information display systems capable of displaying various kinds of information required during work with good visibility, work vehicles including such information display systems, and display methods to display images are provided.

### BRIEF DESCRIPTION OF DRAWINGS

FIG. **1A** is a side view schematically illustrating an example work vehicle according to an embodiment of the present disclosure.
FIG. **1B** is a diagram illustrating an example of a group of operation switches and an operation terminal provided inside a cabin of a work vehicle.
FIG. **1C** is a side view schematically illustrating another example work vehicle according to an embodiment of the present disclosure.
FIG. **1D** is a front view schematically illustrating a meter panel unit in a state of being attached behind a steering wheel positioned in front of an operator's seat of a work vehicle, in an embodiment of the present disclosure.
FIG. **2** is a front view illustrating an example arrangement of main components of the meter panel unit of this embodiment.
FIG. **3** is a perspective view illustrating an example configuration of a wall surface portion of the meter panel unit of this embodiment.
FIG. **4** is a perspective view illustrating an example configuration of a transparent cover of the meter panel unit of this embodiment.
FIG. **5** is a front view illustrating an example arrangement of indicators of the meter panel unit of this embodiment.
FIG. **6** is a front view illustrating an example state in which various kinds of information are displayed on a display element of the meter panel unit of this embodiment.
FIG. **7** is a perspective view of an analog meter in the meter panel unit of this embodiment.
FIG. **8** is a front view illustrating a positional relationship between a first analog meter, an arc-shaped indicator, and a facing plate.
FIG. **9** is a front view illustrating an example configuration of an arc-shaped indicator.
FIG. **10** is a front view illustrating a second analog meter and a second arc-shaped indicator.
FIG. **11** is a block diagram schematically illustrating an example configuration of an information display system in an embodiment of the present disclosure.
FIG. **12** is a block diagram illustrating an example hardware configuration of a control device.
FIG. **13** is a diagram illustrating an example in which a control device is implemented inside a meter panel unit.
FIG. **14A** is a front view schematically illustrating an example in which an arc with the same color as that of light emitted from a light emitting region of an arc-shaped indicator is displayed.
FIG. **14B** is a front view schematically illustrating an example in which an arc with the same color as that of light emitted from a light emitting region of an arc-shaped indicator, and another object having an arc with the same color, are displayed.
FIG. **15** is a diagram illustrating an example of a home screen.
FIG. **16** is a diagram schematically illustrating an example of segmentation of a display region.
FIG. **17** is a diagram illustrating another example of a work vehicle.
FIG. **18** is a block diagram illustrating an example configuration of an information processing system.
FIG. **19** is a flowchart illustrating an example of an operation by a control device.
FIG. **20** is a diagram illustrating an example of a setting screen relating to a 3P hitch.
FIG. **21** is a diagram illustrating another example of a setting screen relating to a 3P hitch.
FIG. **22** is a diagram illustrating still another example of a setting screen relating to a 3P hitch.
FIG. **23** is a diagram illustrating an example of a setting screen relating to a PTO.
FIG. **24** is a diagram illustrating another example of a setting screen relating to a PTO.
FIG. **25** is a diagram illustrating still another example of a setting screen relating to a PTO.
FIG. **26A** is a diagram illustrating an example of a home screen.
FIG. **26B** is a diagram illustrating an example of a menu screen.
FIG. **26C** is a diagram illustrating an example of a submenu screen.

### DESCRIPTION OF EMBODIMENTS

Meter panel units according to embodiments of the present disclosure will be described below with reference to the accompanying drawings. It should be noted that like reference signs refer to like parts throughout the several views.

The embodiments described below are exemplified to embody technical ideas of the present invention, and the present invention is not limited to the following. Furthermore, the descriptions of sizes, materials, shapes, relative arrangements, and the like of components are not intended to limit the scope of the present invention thereto but intended to be illustrative. The size and positional relationship of members illustrated in the drawings may be exaggerated to facilitate understanding.

### <Overall configuration of work vehicle>

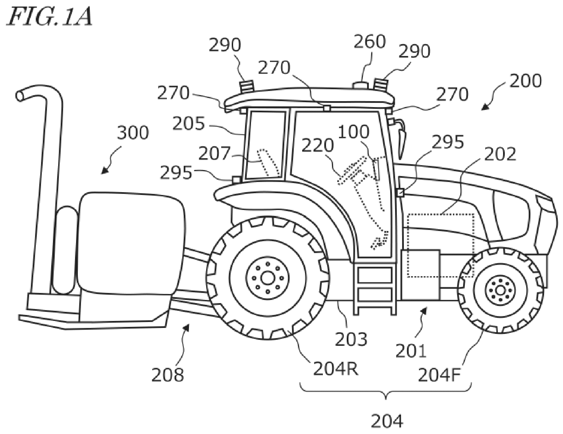

FIG. **1A** is a side view schematically illustrating an example work vehicle **200** according to this embodiment. The illustrated work vehicle **200** is a tractor that tows an implement (replaceable work equipment) **300**.

The work vehicle **200** of FIG. **1A** includes a vehicle body **201**, a prime mover (engine) **202**, and a transmission **203**. The vehicle body **201** is provided with a travel device including tire-mounted wheels **204**, and a cabin **205**. The travel device includes four wheels **204**, axles to rotate the four wheels, and brakes to slow or stop the axles. The wheels **204** of this example include a pair of front wheels **204F** and a pair of rear wheels **204R**. One or both of the front wheels **204F** and the rear wheels **204R** may be replaced by a plurality of wheels to which a continuous track is attached (crawler) instead of a tire-mounted wheel.

In the cabin **205**, a meter panel unit **100** according to an embodiment of the present disclosure, an operator's seat **207**, a steering wheel **220**, and switches for operations are provided.

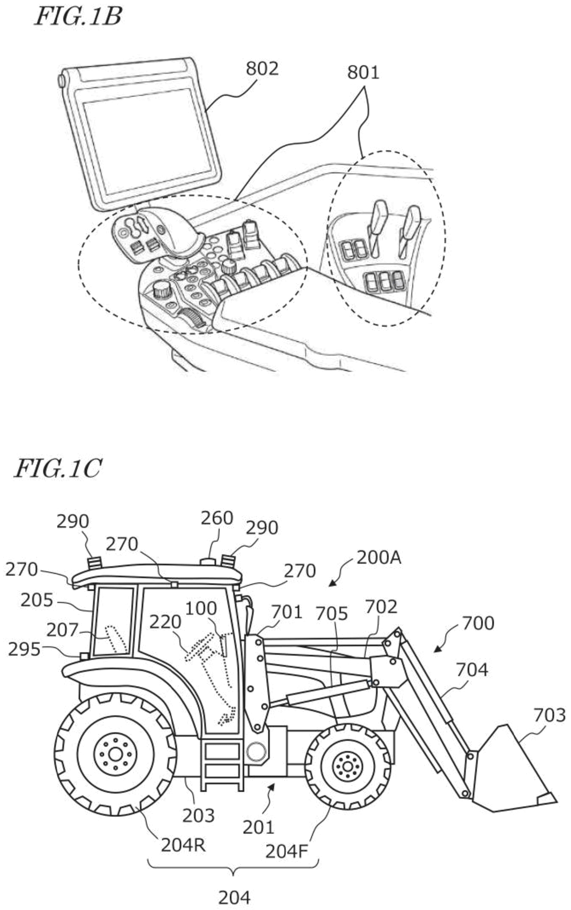

FIG. **1B** is a diagram illustrating an example of a group of operation switches **801** and an operation terminal **802** provided inside the cabin **205** of the work vehicle **200**.

In the interior of the cabin, a group of operation switches **801** including a plurality of switches operable by the user is arranged. The group of operation switches **801** include, for example, switches to select the gear stage of the main transmission or sub-transmission, a switch to switch between forward and reverse travel, and switches to raise and lower the implement.

The operation terminal **802** is a terminal for the user to perform operations relating to the travel of the work vehicle and the operation of the implement, and is also referred to as a virtual terminal (VT). The operation terminal **802** may include a touch screen display device and/or one or more buttons. The display device may be, for example, a liquid crystal or organic light emitting diode (OLED) display.

Referring again to FIG. **1A**. The work vehicle **200** of FIG. **1A** is provided with a plurality of external sensors to sense surroundings of the work vehicle **200**. The external sensors may include various kinds of sensors such as a plurality of cameras **270**, a plurality of obstacle sensors **295**, and a plurality of LiDAR sensors **290**. The cameras **270** may, for example, be provided on the front, rear, left, and right sides of the work vehicle **200**. Each camera **270** captures an image of an environment around the work vehicle **200**, and generates image data. Images obtained by the cameras **270** may, for example, be transmitted to a terminal device for remote monitoring. The cameras **270** are optionally provided, and the number thereof is not particularly limited. The LiDAR sensor **290** is an example external sensor to output sensor data indicating a distribution of objects present in an environment around the work vehicle **200**. In the example of FIG. **1A**, two LiDAR sensors **290** are provided at an upper front portion and an upper rear portion of the cabin **205**. The LiDAR sensors **290** may be provided at other positions (e.g., a lower portion of a front surface of the vehicle body **201**). Each LiDAR sensor **290** repeatedly outputs sensor data indicating distances to and directions of measurement points of objects existing in a surrounding environment, or the three-dimensional coordinate values of the measurement points, while the work vehicle **200** is traveling. The number of LiDAR sensors **290** is not limited to two and may be one or at least three. In the example of FIG. **1A**, the plurality of obstacle sensors **295** are provided at a front portion and a rear portion of the cabin **205**. The obstacle sensors **295** may be positioned at other positions. The obstacle sensors **295** may include a laser scanner or ultrasonic sonar, for example. The LiDAR sensors **290** and the obstacle sensors **295** may be activated, for example, when the work vehicle **200** travels in an automatic driving mode. The LiDAR sensors **290** and obstacle sensors **295** are optionally provided, and the number of each is not particularly limited. Only one of the LiDAR sensors **290** and obstacle sensors **295** may be provided in the work vehicle **200**. In cases where they are not needed, such as when the work vehicle **200** does not have an automatic driving function, the work vehicle **200** need not include the LiDAR sensors **290** and the obstacle sensors **295**.

The work vehicle **200** further includes a GNSS unit **260**. GNSS collectively refers to satellite-based positioning systems, such as the global positioning system (GPS), the quasi-zenith satellite system (QZSS, for example, Michibiki), GLONASS, Galileo, and BeiDou. The GNSS unit **260** receives satellite signals transmitted from a plurality of GNSS satellites (also referred to as GNSS signals), and performs positioning based on the satellite signals. The GNSS unit **260** is provided at an upper portion of the cabin **205**, but the GNSS unit **260** may be provided at other positions.

The engine **202** may, for example, be a diesel engine. An electric motor may be used instead of a diesel engine. The transmission **203** is capable of changing the propelling force and movement speed of the work vehicle **200** by changing gear ratios. The transmission **203** is also capable of allowing the work vehicle **200** to switch between forward movement and rearward movement.

A coupling device **208** is provided at a rear portion of the vehicle body **201**. The coupling device **208** includes, for example, a three-point support device (also referred to as a "three-point linkage" or "three-point hitch"), a power take-off (PTO) shaft, a universal joint, and a communication cable. The coupling device **208** can be used to removably connect an implement **300** to the work vehicle **200**. The coupling device **208** can change the position or orientation of the implement **300** by raising or lowering the three-point linkage using, for example, a hydraulic device. In addition, power can be transmitted from the work vehicle **200** to the implement **300** through the universal joint. While towing the implement **300**, the work vehicle **200** allows the implement **300** to perform predetermined work. A coupling device may also be provided at a front portion of the vehicle body **201**. In that case, an implement can be connected in front of the work vehicle **200**.

Although the implement **300** of FIG. **1A** is, for example, a sprayer for spraying a chemical agent to crops, the implement **300** is not limited to sprayers. For example, any kind of implement **300** such as a mower, seeder, spreader, rake, baler, harvester, plough, harrow, or rotary tiller may be connected to the work vehicle **200** for use.

Thus, the work vehicle **200**, which is used in smart agriculture, includes various sensors, and performs various kinds of work together with the implement **300**. During such work, it is necessary to give the driver (user or operator) various kinds of information about a travel state and a work state. Therefore, information that should be displayed on the meter panel unit **100** may significantly vary depending on the kind and phase of work.

It should be noted that the work vehicle **200**, such as a tractor, may be configured to travel by manual driving, automatic steering, or automatic driving.

Another example of an implement in the present embodiment is a loader including a tip to which an attachment is detachably attached. Various attachments suited to the nature of the work are attached to the tip of the loader. The attachments are, for example, grabs such as bale grabs and silage grabs, forks such as roll forks and super pallet forks, or buckets.

FIG. **1C** is a side view schematically illustrating an example work vehicle **200A** according to this embodiment. The illustrated work vehicle **200A** is a tractor to the front of which a front loader (hereinafter simply referred to as a "loader") **700** is connected. A bucket **703** is attached as an attachment to the tip of the loader **700**. It should be noted that the loader of the present embodiment is not limited to a front loader, and may be a loader connected to the rear of the vehicle.

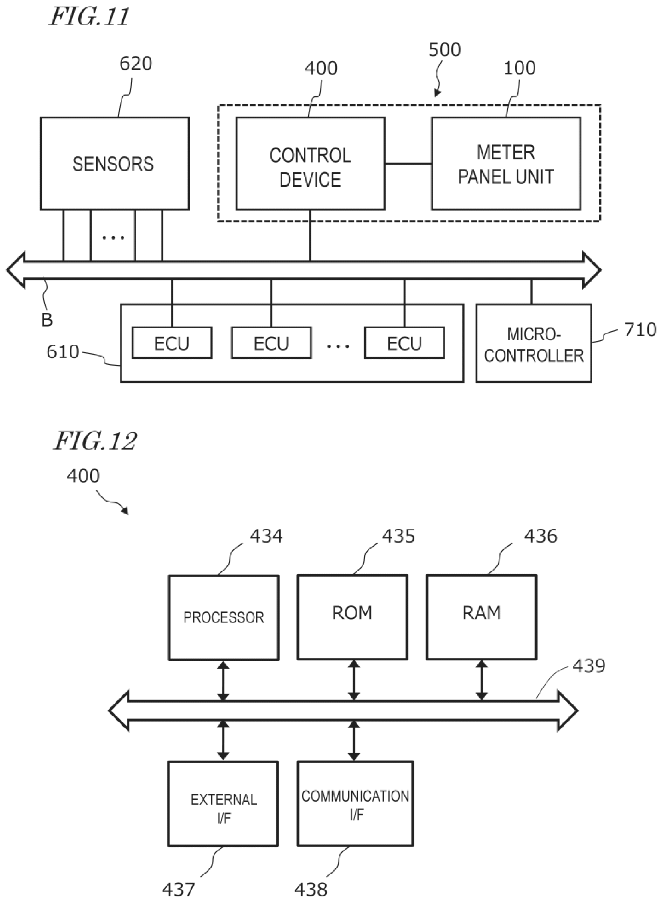

The loader **700** illustrated in FIG. **1C** includes a support frame **701**, a boom **702**, a bucket **703**, a bucket cylinder **704**, and a boom cylinder **705**. The loader **700** further includes a microcontroller **710** (see FIG. **11**) that controls the operation of the loader. The support frame **701** is fixed to the frame of the vehicle body **201**. The boom **702** has an arm-shaped structure and is rotatably supported by the support frame **701** so as to extend forward and upward of the vehicle. The bucket **703** is rotatably supported by an end portion of the boom **702**. In the present embodiment, the pivot (or rotational axis) that rotatably supports the boom **702** is referred to as the "boom pivot," and the pivot (or rotational axis) that rotatably supports the bucket **703** is referred to as the "bucket pivot."

The loader **700** in the present embodiment is connected to the vehicle body **201** via a hydraulic coupler and a power connector. The loader **700** includes a hydraulic system having hydraulic valves, and operates under hydraulic control. Specifically, by extending and retracting the boom cylinder **705** hydraulically, the boom **702** can be rotated around the rotational axis located at the boom pivot. This makes it possible to raise and lower the loader **700** (or bucket **703**). In addition, by extending and retracting the bucket cylinder **704** hydraulically, the bucket **703** can be rotated around the rotational axis located at the bucket pivot. This enables scooping and dumping operations of the bucket **703**.

The group of operation switches **801** (see FIG. **1B**) provided inside the cabin **205** may include an operation lever for performing dump and scoop operations of the bucket **703**. An operation joystick for performing dump, scoop, and lift operations of the bucket **703** may be provided inside the cabin **205**. In addition, the operation terminal **802** may display a setting screen for the hydraulic control valve of the loader, including a button display to adjust the flow rate of hydraulic fluid. The operation lever, joystick, and operation terminal **802** are electrically connected to the microcontroller of the loader. The user can perform desired work while operating the boom **702** and bucket **703** by operating the operation lever, joystick, and the setting screen of the operation terminal **802**.

### <Overall configuration of meter panel unit>

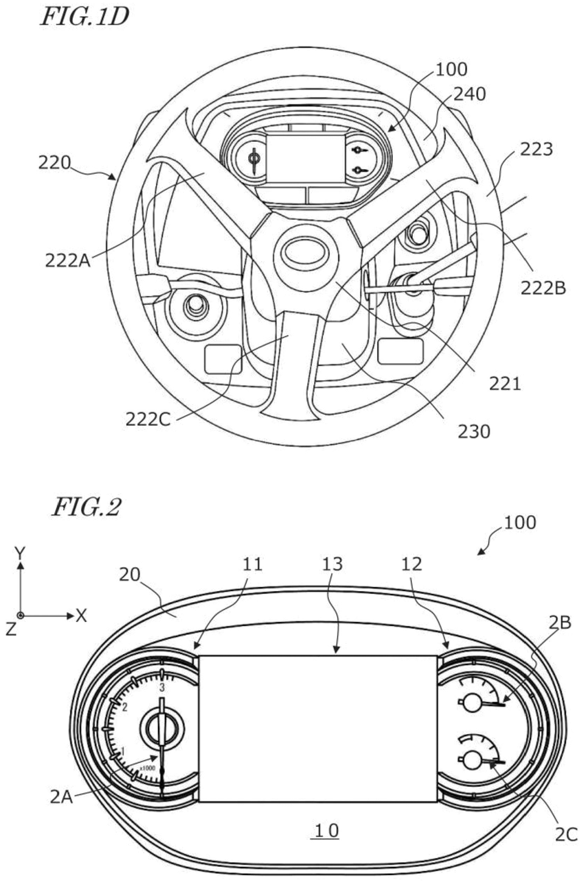

FIG. **1D** is a front view schematically illustrating the meter panel unit **100** when the meter panel unit **100** is attached to a tractor, which is an example work vehicle, in an embodiment of the present disclosure. In the example illustrated in FIG. **1D**, the meter panel unit **100** is positioned on the front side of the operator's seat of the tractor. Specifically, the meter panel unit **100** is positioned above a steering column (steering wheel stay) **230** that supports the steering wheel (handle) **220** in a manner that allows the steering wheel **220** to rotate, and is fitted into an opening of a meter cover **240**. In this example, the steering wheel **220** has a central hub (horn cover) **221**, three spokes **222A**, **222B**, and **222C** radially extending from the horn cover **221**, and a rim **223** supported by the spokes **222A**, **222B**, and **222C**. The meter panel unit **100** is provided at a position that allows the operator sitting on the operator's seat to see the meter panel unit **100**. In the example of FIG. **1D**, various kinds of information displayed on the meter panel unit **100** can be seen through an opening between the spokes **222A** and **222B**.

The meter panel unit **100** is required to have excellent visibility. In particular, in the case of movable work vehicles capable of performing automatic steering or automatic driving, various kinds of information that are not displayed on general passenger cars need to be displayed during various types of agricultural work. For the meter panel unit **100**, having such a feature, it is preferable to improve visibility so as to avoid overlooking more important information of various kinds of information. In addition, in the case in which the meter panel unit **100** is mounted on various work vehicles, it is desirable that the meter panel unit **100** have a structure that allows easy attachment. As described below, the meter panel unit **100** of this embodiment has excellent visibility and is easy to attach.

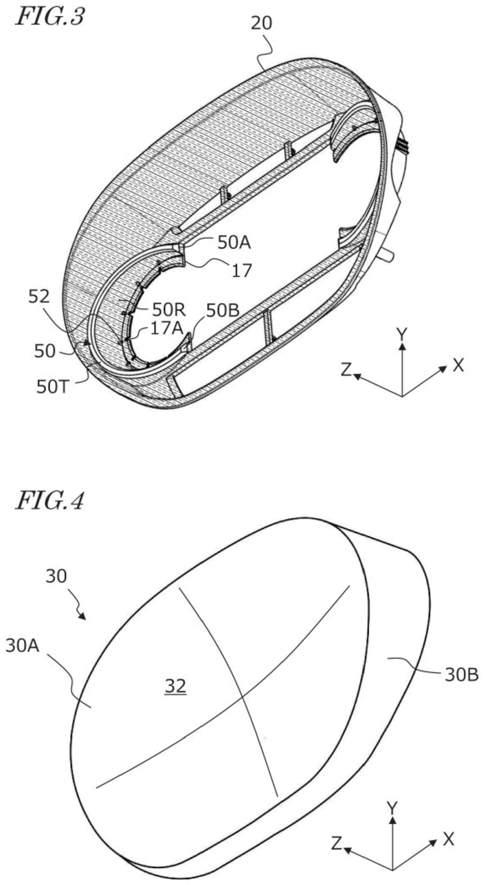

An overall configuration of the meter panel unit **100** will be described below with reference to FIGS. **2**, **3**, and **4**. FIG. **2** is a front view illustrating an example arrangement of main components of the meter panel unit **100** of this embodiment. FIG. **3** is a perspective view illustrating an example configuration of a wall surface portion described below of the meter panel unit **100**. FIG. **4** is a perspective view illustrating an example configuration of a transparent cover described below of the meter panel unit **100**. These drawings illustrate an X-axis, a Y-axis, and a Z-axis that are orthogonal to one another for reference (right-handed coordinate system). In the present description, the positive direction of the Y axis is also referred to as "upward," and the negative direction thereof is also referred to as "downward." The positive direction of the X axis is also referred to as "rightward," and the negative direction thereof is also referred to as "leftward." The positive direction of the Z axis is also referred to as "forward," and the negative direction thereof is also referred to as "backward."

As illustrated in FIG. **2**, the meter panel unit **100** includes a meter portion **10** including a first analog meter **11**, a second analog meter **12**, and a display element **13** provided between the first and second analog meters **11** and **12**. In the present description, a portion of the meter portion **10** of FIG. **2** that displays information is also referred to as a display surface side of the meter portion **10**.

The first analog meter **11** includes a pointer **2A**, and the second analog meter **12** includes pointers **2B** and **2C**. The pointer **2A** is supported in a manner that allows the pointer **2A** to rotate around a rotation axis positioned near the center of the first analog meter **11**. The pointer **2A** indicates the engine speed by the direction in which the tip of the pointer **2A** is oriented, for example. Here, "engine speed" means the number of revolutions of the engine per unit time (for example, one minute). The pointers **2B** and **2C** are supported in a manner that allows the pointers **2B** and **2C** to rotate around the respective axes of rotation located at different positions of the second analog meter **12**. The pointer **2B** indicates the remaining amount of fuel by the direction in which the tip of the pointer **2B** is oriented. The pointer **2C** indicates the temperature (water temperature) of engine-cooling water by the direction in which the tip of the pointer **2C** is oriented, for example. The pointers **2A**, **2B**, and **2C** are driven by a drive mechanism (movement) included in the meter portion **10**. The drive mechanism receives an electrical signal indicating a sensor output such as the engine speed, the remaining amount of fuel, or the water temperature, and converts the electrical signal into mechanical movements for changing the orientations of the pointers **2A**, **2B**, and **2C**. The drive mechanism for each pointer **2A**, **2B**, **2C** includes an actuator such as a stepping motor.

The display element **13** is a digital meter rather than an analog meter. The display element **13** is, for example, an active matrix display, such as a liquid crystal display panel or an organic light emitting diode (OLED). In the following description, as an example, it is assumed that the display element **13** is a liquid crystal display (LCD). The display element **13** includes a large number of pixels two-dimensionally arranged in a display region, and provides display visible to the human eye by emitting light from the large number of pixels. In this embodiment, each pixel of the display element **13** includes R, G, and B subpixels, and therefore, the display element **13** is capable of displaying color images. Unlike analog meters, the display element **13** is capable of displaying numerals, letters, graphics, icons, symbols, still images, or moving images having any appropriate sizes at any appropriate positions in the display region. Strictly speaking, numerals, letters, graphics, icons, and symbols are a part of images (still images or moving images) displayed in the display region by the display element **13**. The display element **13** is also capable of apparently displaying an image similar to all or a portion of an analog meter having a pointer. In the case in which the display element **13** displays an image of an "analog meter," a "pointer" in the image can be turned in any appropriate direction as a portion of moving images, by changing images on a frame-by-frame basis. It should be noted that in the case in which the work vehicle is an electric vehicle that is driven by a battery, the display of the engine speed, the remaining amount of fuel, and the water temperature may, for example, be replaced by the display of a motor output, the state of charge of the battery, and the temperature of the battery, respectively.

The "analog meter" displayed by a display device such as the display element **13** is different from the first analog meter **11** and the second analog meter **12** in that the former is two-dimensional and the latter is three-dimensional. In addition, whereas the shape, color, and size of the pointer and scales of the former analog meter are changeable, it is difficult to change those of the latter. Furthermore, the visibility of the former depends on the contrast of an image, and therefore, is likely to decrease during the daytime, when external light is strong, whereas such a problem with the latter is relatively small. With the above in mind, in this embodiment, a portion of information displayed in the meter portion **10**, particularly information with high importance and requiring high visibility, is displayed using an analog meter having a three-dimensional structure.

An external shape of the meter portion **10** when the meter portion **10** is viewed from the front of the display surface side is a closed loop similar to an ellipse. The external shape of the meter portion **10** is not limited to such an example. The external shape of the meter portion **10** when the meter portion **10** is viewed from the front may have generally a rectangular shape, or a shape that is a combination of a straight line and a curved line.

The meter panel unit **100** further includes a wall surface portion **20** fixed to the display surface side of the meter portion **10**, and a transparent cover **30** opposite the display surface of the meter portion **10**.

The wall surface portion **20** surrounds the first analog meter **11**, the display element **13**, and the second analog meter **12** entirely along the peripheral edge of the meter portion **10**. The wall surface portion **20** may, for example, be formed of a plastic (synthetic resin). The wall surface portion **20** protrudes vertically (the positive direction of the Z axis) from the display surface of the meter portion **10**. The wall surface portion **20** does not necessarily need to be perpendicular to the display surface of the meter portion **10**, and may be tilted from the Z axis. In the present disclosure, the distance between the display surface of the meter portion **10** and an end on the front side of the wall surface portion **20** is referred to as a "height" of the wall surface portion **20**. In this embodiment, the height of the wall surface portion **20** is not uniform along the peripheral edge of the meter portion **10**, and may vary depending on the position on the peripheral edge.

As illustrated in FIG. **4**, the transparent cover **30** includes a front surface section **30A** including a concave surface **32**, and a side surface section **30B** extending from the peripheral edge of the front surface section **30A** along the outer side of the wall surface portion **20**. The side surface section **30B** of the transparent cover **30** can cover the outer side of the wall surface portion **20** along all the periphery thereof. The transparent cover **30** may, for example, be made of a colorless, transparent plastic (e.g., acrylic resin), or glass. In this embodiment, the front surface section **30A** and the side surface section **30B** of the transparent cover **30** are integrally formed together.

When the transparent cover **30** is viewed from the direction of the normal to the meter portion **10** with the meter panel unit **100** attached to the work vehicle, the front surface section **30A** of the transparent cover **30** is preferably tilted forward toward the operator. In the case in which the front surface section **30A** is tilted forward, when the operator sees the meter portion **10** through the transparent cover **30**, the operator's face and the background behind the operator are less likely to be reflected on the transparent cover **30**.

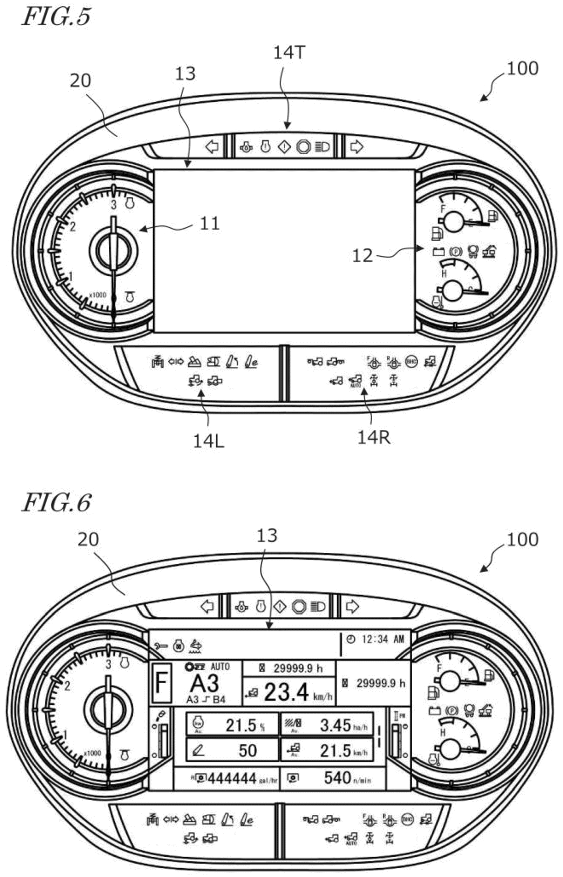

Next, an indicator region of the meter portion **10** will be described with reference to FIG. **5**. In the example of FIG. **5**, the meter portion **10** includes an indicator region **14T** provided above the display element **13**, and indicator regions **14L** and **14R** provided below the display element **13**. Various indicators are provided in each of the indicator regions **14T**, **14L**, and **14R**. Each indicator presents predetermined information such as warning when a light emitting device such as a light emitting diode (LED) behind the indicator is on.

It should be noted that in this embodiment, two indicator regions **14L** and **14R** that are divided left and right are arranged below the display element **13**, but one indicator region that integrates the two indicator regions may be arranged.

Visibility of the indicator region **14T**, which is positioned above the display element **13**, is less likely to be obstructed by the spokes **222A**, **222B**, and **222C** of the steering wheel **220**, compared to the other indicator regions **14L** and **14R**. Therefore, it is preferable that indicators for indicating particularly important information (information with a higher warning level) (e.g., indicators for indicating the on/off state of the illumination device, turn signals, and warnings to the operator) be selected from a large number of indicators and arranged in the indicator region **14T**. The "warning level" of information displayed by an indicator may, for example, be specified in the manual of the work vehicle. For example, information such as the abnormality or failure of the engine and the on/off state of the headlamp has a higher warning level.

In this embodiment, each indicator arranged in the indicator region is composed of a light transmission region having a shape that defines a characteristic graphic (including icons and/or letters) and a light emitting device arranged behind the light transmission region. The indicator may be turned on/off by the light emitting device behind the indicator being turned on/off. One or two light emitting devices are arranged behind each indicator, for example.

Next, an example display of the display element **13** will be described with reference to FIG. **6**. In the example of FIG. **6**, the display region of the display element **13** is divided into several regions as described below. In each region, an "image" showing information such as the gear ratio, vehicle speed, various functional performance information, or hour meter is displayed. The images include various kinds of information represented by letters, numerals, graphics, icons, symbols, and the like. Various kinds of digital images may be indicated by different colors in order to increase the visibility. In particular, when the operator's attention should be attracted, display may be performed in which at least one of the positions, sizes, or colors of letters, numerals, graphics, icons, or symbols are changed and emphasized. When such emphasized display is performed, sound or speech may be emitted from an audio device such as a loudspeaker.

### <Communication ring and facing plate>

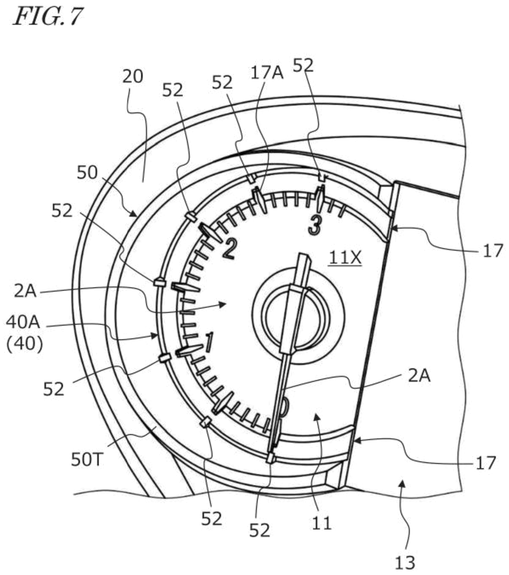

Next, an arc-shaped indicator (C-shaped communication ring) and a facing plate will be described with reference to FIGS. **7** to **9**.

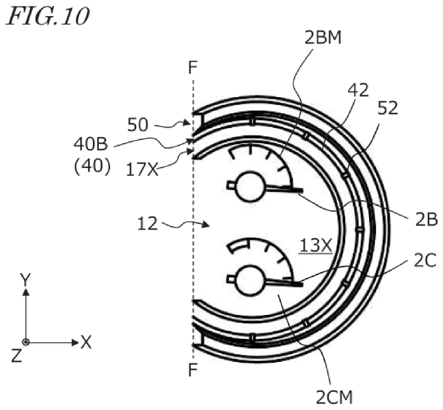

In this embodiment, the meter panel unit **100** includes a first arc-shaped indicator (communication ring) **40A** arranged around a sweep range **11X** of the pointer **2A**, and a second arc-shaped indicator **40B** (see FIG. **10**) arranged around sweep ranges of the pointers **2B** and **2C**. In the present disclosure, the term "arc" means a portion of a circle (circumference). The circle is not limited to a "perfect circle," and may include a portion whose curvature is gradually or locally changed like a portion of an ellipse.

The structure of the first arc-shaped indicator **40A** and the structure of the second arc-shaped indicator **40B** are symmetrical about a vertical line, and therefore, are collectively referred to as arc-shaped indicators **40**. The arc-shaped indicators **40** will be described below using the first arc-shaped indicator (communication ring) **40A** as an example, for the sake of simplicity.

As illustrated in FIG. **7**, the meter panel unit **100** of this embodiment includes a facing plate **50** positioned outward of the arc-shaped indicator **40**. The facing plate **50** is formed of the same material (plastic) as that for the wall surface portion **20**. As illustrated in FIG. **3**, the facing plate **50** is integral with the wall surface portion **20**. The facing plate **50** is in the shape of roughly an arc as viewed from the front. A height of an upper end **50T** of the facing plate **50** (that is, the distance from the display surface of the meter portion **10**) varies continuously from an end **50A** on the upper side to an end **50B** on the lower side, and is greatest at a middle position. The facing plate **50** is a curved wall rising from the meter portion **10**.

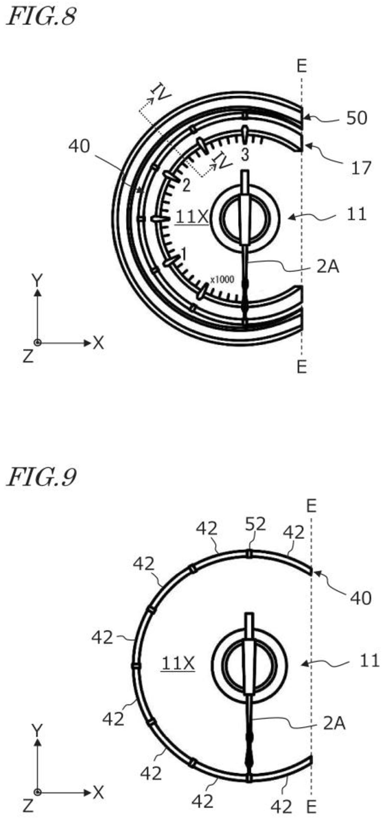

FIG. **8** is a front view illustrating a positional relationship between the first analog meter **11**, the arc-shaped indicator **40**, and the facing plate **50**. FIG. **9** is a front view mainly illustrating an example configuration of the arc-shaped indicator **40**. None of the first analog meter **11**, the arc-shaped indicator **40**, and the facing plate **50** extends rightward (the positive direction of the X axis) beyond a dashed line E-E of FIG. **8**. The display element **13** is arranged rightward (in the positive direction of the X axis) of the dashed line E-E.

With such a configuration, while the length of the pointer **2A**, or the radius of the first analog meter **11**, is increased, an increase in the size in the horizontal direction (X-axis direction) of the first analog meter **11** can be reduced. This also holds true for the second analog meter **12**. It should be noted that as illustrated in FIG. **1D**, when the size in the horizontal direction of the meter portion **10** is increased, the spokes **222A** and **222B** of the steering wheel **220** are more likely to obstruct seeing of the first and second analog meters **11** and **12**. Therefore, it is not preferable to increase the size in the horizontal direction of the meter portion **10**. In this embodiment, the analog meter is contained inside a shape surrounded by the dashed line E-E and an arc rather than a circle. Therefore, even for the meter portion **10**, which has a limited size in the horizontal direction, the size in the horizontal direction (X-axis direction) of the display element **13** can be increased while the visibility of the first and second analog meters **11** and **12** is increased. In addition, because the first and second analog meters **11** and **12** and the display element **13** are separated from each other by a straight line, the display area for analog information and the display area for digital information can be clearly separated from each other, and therefore, the visibility of both analog information and digital information can be improved.

In order to obtain the above effect, it is preferable that the central angle of the "arc" of the arc-shaped indicator **40** (**40A**), which is arranged, surrounding the first analog meter **11**, be greater than 180° and smaller than **270**°. If the central angle of the "arc" is at most 180°, the visibility of the first analog meter **11** decreases. If the central angle of the "arc" is at least **270**°, the effect of reducing the size in the horizontal direction (X-axis direction) of the first analog meter **11** is not sufficient. This also holds true for the arc-shaped indicator **40** (**40B**) surrounding the second analog meter **12**. In terms of design properties, it is preferable that the left and right arc-shaped indicators **40A** and **40B** be positioned symmetrically about a vertical line passing through the center of the display element **13**.

The arc-shaped indicator **40** includes at least one light emitting region **42** between the sweep range **11X** of the pointer **2A** and the facing plate **50**. In the example of FIG. **9**, a plurality of light emitting regions **42** are provided. In this example, each light emitting region **42** has a fine curved shape extending along an arc. The plurality of light emitting regions **42** are arranged in a sequence of arcs to provide the arc-shaped indicator **40**. In the case in which the number of light emitting regions **42** is one, a single light emitting region **42** has an arc shape.

In the example illustrated in the figure, the first analog meter **11** includes an arc-shaped scale **17** between the arc-shaped indicator **40** and the sweep range **11X** of the pointer **2A**. The scale **17** has a three-dimensional shape protruding from the display surface (raised scale). The scale **17** is formed of a plastic integrally with the wall surface portion **20** and the facing plate **50**. It should be noted that the scale **17** does not necessarily need to have a three-dimensional shape. The scale **17** desirably has a three-dimensional shape in terms of higher visibility.

Although the plurality of light emitting regions **42** included in the arc-shaped indicator **40** may each include a light emitting element (e.g., an LED or OLED), in this embodiment the plurality of light emitting regions **42** are configured with a plurality of light transmission regions provided on the display surface of the meter portion **10** (i.e., the surface on the front side of the housing of the meter portion **10**) and at least one light emitting device arranged behind the plurality of light transmission regions.

The plurality of light emitting devices may include a plurality of LEDs that emit different colors. In this embodiment, the plurality of light emitting devices include an LED that emits red light, an LED that emits green light, and an LED that emits blue light. By causing these LEDs to selectively emit light, the arc-shaped indicator **40** can exhibit the function of notifying the operator of information using light having various colors. For example, all of the light emitting regions **42** of FIG. **9** can selectively emit red light, green light, and blue light. Alternatively, a light emitting device may be assigned to each of the plurality of light emitting regions **42**, and the plurality of light emitting devices may be caused to emit light separately, so that light beams can be sequentially emitted from the plurality of light emitting regions **42**.

### <Raised scale>

Next, the raised scale **17** will be described. As illustrated in FIGS. **7** and **8**, the raised scale **17** extends in the shape of an arc inside the arc-shaped indicator **40** to form generally a C-shape. As illustrated in FIGS. **3** and **7**, the raised scale **17** includes a plurality of notches **17A** arranged at predetermined intervals. The notch **17A** is a portion of the raised scale **17** whose width is locally reduced. The position of the notch **17A** corresponds to the position of a scale that is to be indicated by the tip of the pointer **2A** in the first analog meter **11**. The presence of the three-dimensional notches **17A** facilitates reading of scales by the operator.

As illustrated in FIG. **7**, the facing plate **50** includes a plurality of protrusions **52** that protrude toward the sweep range **11X** of the pointer **2A**. The plurality of protrusions **52** are provided at the positions of the notches of the raised scale **17**, or in other words, positions aligned with the scales. Therefore, the notch **17A** of the raised scale **17** is recognized as a graphic integrated with the protrusion **52**, resulting in an improvement in the visibility of the scale. The plurality of protrusions **52** each extend across between the plurality of light emitting regions **42** of the arc-shaped indicator **40**. Therefore, the array of the plurality of light emitting regions **42** also corresponds to the array of the scales.

As can be seen from FIG. **3**, the plurality of protrusions **52** serve as a bridge that connects the raised scale **17** to the facing plate **50**. The facing plate **50** is connected to the wall surface portion **20**. In this embodiment, the wall surface portion **20**, the facing plate **50**, and the raised scale **17** are integrally formed of a resin. The plurality of protrusions **52**, which extend from the facing plate **50**, delimit a boundary portion of the plurality of light emitting regions **42** in the arc-shaped indicator **40**.

Next, the second analog meter **12** and the second arc-shaped indicator **40B** will be described with reference to FIG. **10**. The second arc-shaped indicator **40B** and the first arc-shaped indicator **40A** are symmetrical about a vertical line, and have substantially the same configuration. A facing plate (right facing plate) **50** is provided outward of the second arc-shaped indicator **40B**. The left facing plate **50** and the above facing plate (left facing plate) **50** are symmetrical about a vertical line.

Although an arc-shaped rib **17X** corresponding to the raised scale **17** is provided inside the second arc-shaped indicator **40B**, no notches are present in the arc-shaped rib **17X**. Protrusions (bridges) **52** are equally spaced and arranged between the arc-shaped rib **17X** and the right facing plate **50** so as to delimit a plurality of light emitting regions **42** included in the second arc-shaped indicator **40B**.

A sweep range **13X** of the second pointer **2B** and the third pointer **2C** is provided in a range surrounded by the second arc-shaped indicator **40B**. A rotational angle range **2BM** of the second pointer **2B** and a rotational angle range **2CM** of the third pointer **2C** have a similar or congruent outer shape. In the example of FIG. **10**, the rotational angle range **2BM** of the second pointer **2B** and the rotational angle range **2CM** of the third pointer **2C** are vertically symmetrical, but this is not limited to such an example. The rotational angle range **2BM** and the rotational angle range **2CM** may have a shape and size such that they overlap each other when one of them is translated in the vertical direction, for example.

With such a configuration, scales can be intuitively read based on the movements of the second pointer **2B** and the third pointer **2C**, and are less likely to be erroneously read.

### <Information display system>

An information display system **500** according to an embodiment of the present disclosure will be described below with reference to FIGS. **11** to **14B**. FIG. **11** is a block diagram schematically illustrating an example configuration of the information display system **500** in an embodiment of the present disclosure. The information display system **500** includes the above meter panel unit **100**, and a control device **400** that controls the meter panel unit **100**. The control device **400** may include an electronic control unit (ECU) arranged in the work vehicle. The information display system **500** may further include an audio device such as a buzzer or a speaker.

The information display system **500** is communicably connected via a bus B to an ECU group **610**, sensors **620**, and a microcontroller **710** of the loader included in the work vehicle. The ECU group **610** may be collectively referred to as a "vehicle control device." In the present specification, various ECUs included in the work vehicle are referred to as "vehicle ECUs," and an ECU in the control device **400** included in the information display system **500** is referred to as a "meter ECU" to distinguish between the two. Various vehicle ECUs and the meter ECU can communicate with each other according to a vehicle bus standard such as CAN (controller area network), for example. For example, one vehicle ECU among the ECU group **610** included in the work vehicle receives signals from other vehicle ECUs and sensor data output from each sensor included in the sensors **620**, and instructs the meter ECU to display warning messages as described below or to turn on/off/blink indicators according to the state of the work vehicle. The meter ECU receives instructions from the vehicle ECU and causes warning messages to be displayed in the display region or causes indicators to be turned on or off, or to blink.

In FIG. **11**, illustration of wiring other than the wiring of the bus B is simplified. However, for example, there may be wiring for directly transmitting signals from one or more sensors included in the sensors **620** included in the work vehicle to the control device **400**, or wiring connecting an input device described below and the control device **400**. In addition, there is power supply wiring for supplying power from a battery to each of the meter panel unit **100**, the control device **400**, the ECU group **610**, and the sensors **620** of the work vehicle.

One example of the control device **400** in the present embodiment is a computing device including at least one processor and at least one memory that stores a computer program (code) defining a control process to be executed by the processor. Another example of the control device **400** is a computing device including a hardware accelerator such as an FPGA (Field-Programmable Gate Array), ASSP (Application Specific Standard Product), or ASIC (Application-Specific Integrated Circuit) configured to execute the control process.

A "processor" in the present embodiment is a hardware electronic circuit such as a CPU (Central Processing Unit), GPU (Graphics Processing Unit), DSP (Digital Signal Processor), ISP (Image Signal Processor), or NPU (Neural Network Processing Unit). A "memory" is a hardware electronic circuit such as a ROM (Read Only Memory) or RAM (Random Access Memory). A portion of the memory may be a storage medium connected to the processor by wiring or a network. These hardware electronic circuits may be implemented by one or more integrated circuits (IC) or large-scale integrated circuits (LSI). Each functional unit or block in an electronic circuit and related components may be individually manufactured as separate integrated circuit chips, or some or all of these functional units or blocks may be combined and manufactured as a single integrated circuit chip.

A program that defines the operation of the processor is designed so that the processor executes one or more functions, operations, steps, or processes in the embodiments of the present invention.

FIG. **12** is a block diagram illustrating an example hardware configuration of the control device **400**. The control device **400** includes a processor **434**, a ROM **435**, a RAM **436**, an external I/F **437**, and a communication I/F **438**. These components are interconnected via a bus **439**.

The ROM **435** is, for example, a writable memory (e.g., PROM), a rewritable memory (e.g., flash memory), or a read-only memory. The ROM **435** stores programs that control the operation of the processor. The ROM **435** does not need to be a single recording medium and may be a collection of multiple recording media. A portion of the multiple collections may be removable memory.

The RAM **436** provides a working area for temporarily expanding programs stored in the ROM **435** at boot time. The RAM **436** does not need to be a single recording medium and may be a collection of multiple recording media.

The external I/F **437** is an interface to connect the meter panel unit **100** to external devices. Examples of the external I/F **437** include a universal serial bus (USB) interface and digital or analog video interfaces.

The communication I/F **438** is an interface to perform communication between the control device **400** and other electronic components or ECUs. For example, the communication I/F **438** can perform wired communication in accordance with various protocols such as CAN or Ethernet^{®}. The communication I/F **438** may perform wireless communication in accordance with Bluetooth^{®} standards and/or Wi-Fi^{®} standards. Both standards include wireless communication standards using frequencies in the 2.4 GHz band.

The control device **400** may further include a storage device. The storage device may be, for example, a semiconductor memory, a magnetic storage device, or an optical storage device, or a combination thereof.

The ECU group **610** included in the work vehicle includes, for example, an ECU for speed control, an ECU for steering control, and an ECU for implement control. When the work vehicle (e.g., tractor) is configured to travel by automatic driving, the ECU group **610** may further include an ECU for automatic driving control. The ECU for automatic driving control performs calculations and control for realizing automatic driving based on data output from various sensors mounted on the vehicle body.

The sensors **620** may include, for example, a temperature sensor, an illuminance sensor, a fuel sensor, a water temperature sensor, an oil level gauge, an engine rotation sensor, a vehicle speed sensor, a battery voltage sensor, a shuttle sensor, a hand accelerator sensor, an accelerator pedal sensor, a main transmission lever sensor, a sub-transmission lever sensor, a seat belt sensor, a PM sensor, an acceleration sensor, an angular velocity sensor, an inertial measurement unit (IMU), a geomagnetic sensor, an imaging device, a LiDAR sensor, an ultrasonic sensor, an obstacle contact sensor, and a global navigation satellite system (GNSS) receiver.

The control device **400** of the information display system **500** may be an integrated circuit device mounted on a substrate inside the meter panel unit **100**, or may be an external integrated circuit device externally attached to the meter panel unit **100**. Furthermore, some or all of the functions of the control device **400** may be realized by one or more vehicle ECUs. Alternatively, some or all of the functions of the control device **400** may be realized by one or more servers (computers) connected via the communication I/F **438** through a communication network. In this way, one or more vehicle ECUs and/or one or more servers may cooperate with the control device **400** to realize various functions required for the information display system **500**. In this case, the vehicle ECU and/or the server function as part of the information display system **500**.

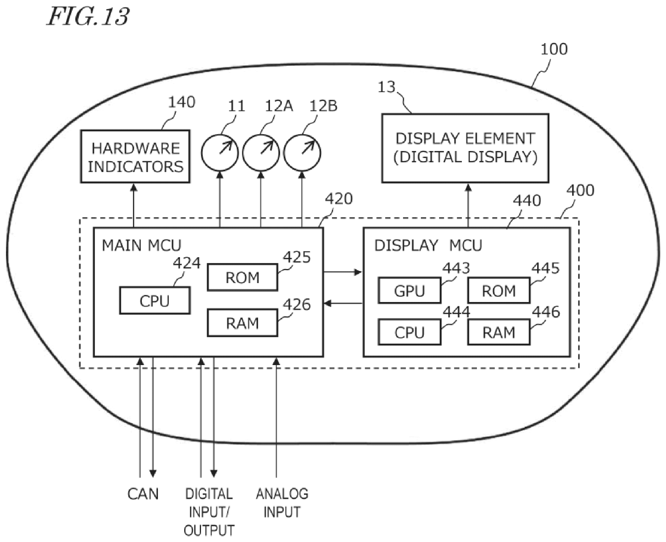

FIG. **13** is a block diagram illustrating an example in which the control device **400** is implemented inside the meter panel unit **100**. In this example, the control device **400** includes two microcontroller units (MCUs). The two MCUs are a main MCU **420** and a display MCU **440**. The main MCU **420** is a controller that controls the overall operation of the meter panel unit **100**. The main MCU **420** may also be referred to as a "main controller." The display MCU **440** is a controller that controls rendering on the display element **13** (i.e., digital display) such as an LCD. The display MCU **440** may also be referred to as a "display controller" or "LCD MCU."

The main MCU **420** includes components such as a CPU **424**, a ROM **425**, and a RAM **426**, for example. The main MCU **420** controls hardware indicators **140**, the first analog meter **11**, the second analog meter **12** (in this embodiment, two analog meters **12A** and **12B**), and the display MCU **440**. The hardware indicators **140** includes the arc-shaped indicator **40** and a plurality of light emitting devices such as LEDs behind the indicator regions **14T**, **14L**, and **14R** illustrated in FIG. **5**. The ROM **425** is a non-volatile memory that stores software (programs and various data used in processing) to be executed by the CPU **424**. The main MCU **420** controls the overall operation of the meter panel unit **100** by the CPU **424** executing the software. The main MCU **420** may include an interface to communicate with one or more vehicle ECUs connected to the meter panel unit **100** via an in-vehicle network such as CAN. The main MCU **420** may also include an external interface that enables input and output of digital signals to and from devices directly connected to the meter panel unit **100**. The main MCU **420** may further include an analog interface to which analog signals such as the voltage of the external battery are input.

The display MCU **440** includes components such as a CPU **444**, a GPU **443**, a ROM **445**, and a RAM **446**, for example. The ROM **445** is a non-volatile memory that stores software to be executed by the CPU **444** and the GPU **443**. The display MCU **440** controls rendering on the display element **13** (i.e., digital display) by the CPU **444** and GPU **443** executing the software.

In the example illustrated in FIG. **13**, the display MCU **440** dedicated to image processing is provided separately from the main MCU **420**. This is to achieve relatively high-load rendering such as color camera images and 3D display on the display element **13** such as a relatively large (e.g., **10** inches or more) and high-definition LCD. Unlike the present embodiment, if the display element **13** is small or a monochrome liquid crystal display and sophisticated image processing is not required, the display MCU **440** may not be provided, and one controller (i.e., the main MCU **420**) may perform all control including rendering.

### <Information display by arc-shaped indicator and display element>

In the information display system **500** of this embodiment, the control device **400** is configured to cause the arc-shaped indicator **40** to display information before causing the display element **13** to display various kinds of information when the work vehicle is started. This allows information that the operator should first be aware of to be presented to the operator with higher priority at startup. Such information has information indicating a state (a state classified as abnormality in traveling or working) of the work vehicle. The control device **400** is also configured to change the color of emitted light according to contents of information. For example, the control device **400** may be configured to emit blue light from the arc-shaped indicator **40** when an abnormality does not arise during starting, and to emit red light indicating an abnormality immediately after starting if a problem is expected to arise during traveling. Examples of a cause for a problem that will arise during traveling include an abnormal voltage of a battery, an abnormal pressure of an engine oil, abnormal heating of an engine, and an abnormality in a brake system. It should be noted that the color of the emitted light is not limited to blue or red, and may be green.

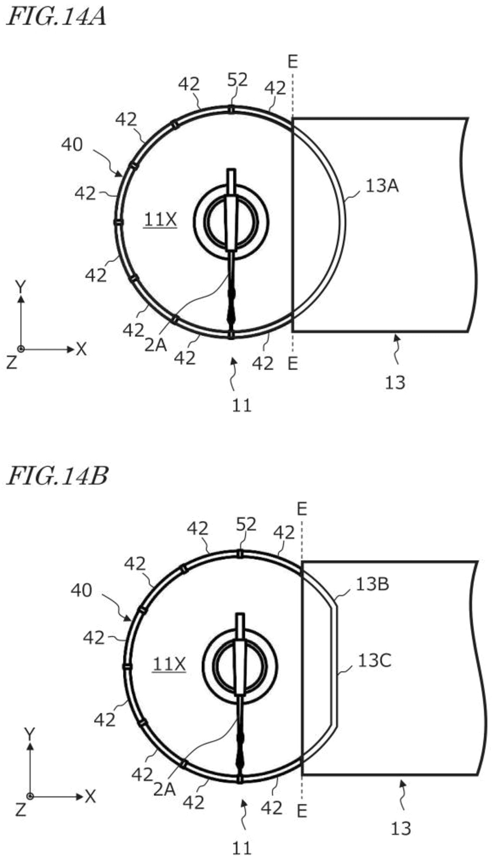

Furthermore, in this embodiment, the control device **400** is configured to cause the display element **13** to display a curved line-shaped image positioned on an extension of the arc. FIG. **14A** is a front view schematically illustrating an example in which an arc **13A** having the same color as that of light emitted from the light emitting region **42** of the arc-shaped indicator **40** is displayed. In FIG. **14A**, as an example, an arc **13A** having the same center as that of the arc of the arc-shaped indicator **40** is displayed. FIG. **14B** is a front view schematically illustrating an example in which an arc **13B** having the same color as that of light emitted from the light emitting region **42** of the arc-shaped indicator **40**, and another object **13C** having an arc with the same color, are displayed. In the example of FIG. **14B**, the object **13C** is a straight line portion. The control device **400** causes the display element **13** to display the concentric arc **13B** with the arc of the light emitting region **42**, and the straight line portion connected to the arc **13B**. The straight line portion extends in parallel with a straight line forming the boundary between the first analog meter **11** and the display element **14** (corresponding to a dashed line E-E of FIG. **14B**). By providing such display, a portion of the circle surrounding the first analog meter **11** that is cut away by the dashed line E-E is seen as a portion of the first analog meter **11** by the operator, and therefore, the operator can feel that the first analog meter **11** is large. In addition, an image that is displayed as if the image were a portion of the first analog meter **11** (hereinafter referred to as a "ring-complement image") may be partially hidden by information such as numerals or letters displayed on the display element **13**. Similarly to the shaped object **13C**, the portion of the arc **13B** may include a straight line shape. By including a straight line shape in the portion displayed on the display element **13**, a sharp design can be achieved.

The control device **400** can cause the display element **13** to display various images, which are not limited to the examples of FIGS. **14A** and **14B**, in association with light emitted from the light emitting region **42** of the arc-shaped indicator **40**. The control device **400** can also cause the display element **13** to display various images in synchronization with the flickering of the light emitting region **42** of the arc-shaped indicator **40**. What is conveyed by the display of the arc-shaped indicator **40** to notify the operator can be more easily understood by the operator by emphasizing that display and the display of the display element **13** or associating these displays with each other.

### <Example of display and operation of display element>

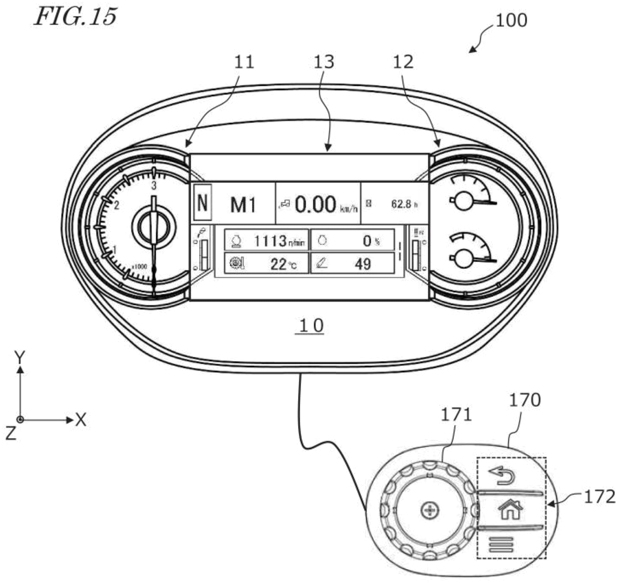

After startup of the meter panel unit **100**, a home screen is displayed in the display region of the display element **13**. FIG. **15** is a diagram illustrating an example of a home screen. Starting from the home screen, the user can perform operations to change the display of content on the display region or select various setting items using an input device described below.

In the example illustrated in FIG. **15**, an input device **170** that enables interactive operations by the user is connected to the meter panel unit **100** via a communication cable. The input device **170** has, for example, a selector switch **171** such as a jog dial and an operation switch **172**. The input device **170** may be connected to the meter panel unit **100** wirelessly or by wire. Any device that accepts user operations can be used as the input device **170**. The input device **170** may be, for example, a rotary switch, a slide switch, a push button switch, a touch screen, a joystick, or a combination of two or more thereof.

The display element **13** includes a display region in which various images showing information about the work vehicle are displayed. Information about the work vehicle includes, for example, information related to an internal combustion engine (engine), the vehicle body, a PTO shaft, hydraulics/three-point hitch, and electrical equipment provided in the vehicle body. This information is information indicating the internal state of the vehicle system. Information related to the vehicle body includes, for example, information about the direction of travel of the vehicle, clutch, transmission, brakes, headland control, and cruise control. Furthermore, various content including, for example, camera images, radio setting screens, and audio setting screens may be displayed in the display region of the display element **13**.

### <Segmentation of display region>

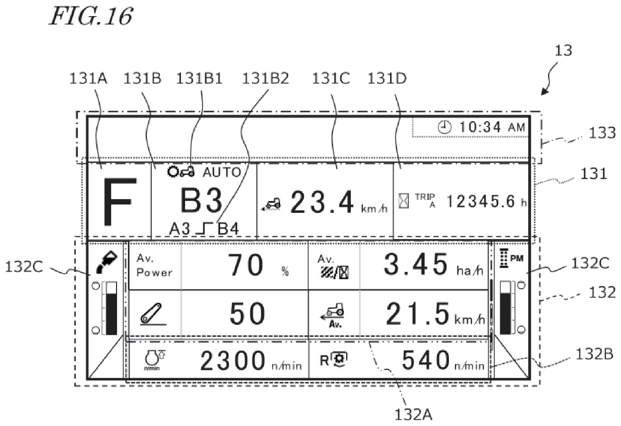

Next, segmentation of the display region will be described with reference to FIG. **16**. FIG. **16** is a diagram schematically illustrating an example of segmentation of the display region. The display region of the display element **13** is divided into multiple blocks. In other words, the display region of the display element **13** has multiple regions. The multiple regions in the example illustrated in FIG. **16** include a primary region **131**, a sub-region **132**, and an LCD indicator region **133**. The primary region **131** in FIG. **16** is a region surrounded by a dotted line in the display region of the display element **13**. The sub-region **132** is a region surrounded by a dashed line in the display region of the display element **13**. The LCD indicator region **133** is a region surrounded by a dash-dot line in the display region of the display element **13**. These three regions do not overlap with each other. It should be noted that the dashed lines, dotted lines, and dash-dot lines in FIG. **16** are partially overlapping for clarity.

The primary region **131** is a region to display images in the foreground (or front). The primary region **131** in the example illustrated in FIG. **16** is a rectangular region (or panel-shaped region). However, the external shape of the primary region **131** may be, for example, an ellipse or a figure that is a combination of straight lines and curved lines. A primary image showing more important information (hereinafter referred to as "primary information") among information about the work vehicle is displayed in the primary region **131**. The primary information is information that the user should know with priority, and includes, for example, information indicating the direction of travel of the work vehicle, transmission state, and vehicle speed (hereinafter referred to as "vehicle speed").

The primary information indicated by the primary image displayed in the primary region **131** in this way is displayed in the foreground of the display region. As illustrated in FIG. **15**, the primary image is displayed in front of the ring-complement image. In this way, the primary image can appropriately convey primary information to the user without being hidden by other images or content. Therefore, the visibility of primary information with particularly high importance among various information is improved, and overlooking of primary information is reduced.

In the example illustrated in FIG. **16**, the primary region **131** has a band-shaped configuration extending in the horizontal direction. Multiple types of information about the travel state of the work vehicle are displayed in the primary region **131**. The primary region **131** is divided into multiple regions. In the example of FIG. **16**, the primary region **131** is divided into a first region **131A**, a second region **131B**, a third region **131C**, and a fourth region **131D** arranged horizontally.

The first region **131A** positioned at the left end displays the state of the shuttle lever of the work vehicle, that is, the direction of travel. The first region **131A** displays, for example, information indicating whether the shuttle lever is in a forward (F), neutral (N), or reverse (R) state.

The second region **131B** positioned second from the left displays information about the transmission state, for example, setting of the gear stage of the work vehicle. In the example of FIG. **16**, the current settings of the main transmission and sub-transmission are displayed as "B3" symbols in the second region **131B**. "B" indicates the setting stage of the sub-transmission, and "3" indicates the setting stage of the main transmission. The second region **131B** may display an icon **131B1** indicating that it is in automatic transmission mode and a range **131B2** of gear stages in the automatic transmission mode, as illustrated in FIG. **16**.

The third region **131C** displays vehicle speed information. The control device **400** switches and displays vehicle speed information in kilometer units or mile units according to, for example, commands from the vehicle ECU.

The fourth region **131D** at the right end displays information other than the direction of travel, transmission state, and vehicle speed. In the example of FIG. **16**, the fourth region **131D** displays the measured value of the hour meter, that is, the operating time of the work vehicle up to now. The fourth region **131D** may display other information, not limited to the measured value of the hour meter. For example, various information such as the upper limit setting value of engine speed or the target value of engine speed recorded in memory may be displayed in the fourth region **131D**. The control device **400** may be configured to dynamically change the display of the fourth region **131D** according to, for example, commands from the vehicle ECU. The fourth region **131D**, together with a region **132B** described below, dynamically displays the performance of travel and work of the work vehicle. Therefore, the fourth region **131D** is sometimes referred to as a "dynamic performance monitor region."

The sub-region **132** is positioned below the primary region **131**. Various content is displayed in the sub-region **132**. The sub-region **132** in the example illustrated in FIG. **16** is a rectangular region and is further divided into three types of regions. The sub-region **132** includes a performance monitor region **132A**, a dynamic performance monitor region **132B**, and two gauge regions **132C**.

The performance monitor region **132A** is the largest region among the three regions included in the sub-region **132** and is positioned toward the upper side of the sub-region **132**. The performance monitor region **132A** is sometimes referred to as the "upper region" in the sub-region **132**. The performance monitor region **132A** mainly displays one or more items selected by the user (hereinafter referred to as "selected items") from among various items showing various functional performance information. Examples of items that can be selected by the user include information about engine speed, engine speed upper limit setting value, engine speed memory value, fuel consumption, fuel efficiency, travel distance, load factor, PTO shaft rotation speed, slip rate, diesel particulate filter (DPF) regeneration, and work area.

The screen of selected items may include multiple pages that can be advanced or returned by the user operating the input device. FIG. **16** shows an example of multiple selected items displayed on one page among multiple pages. In the example illustrated in FIG. **16**, four selected items are displayed on one page. However, the number of selected items displayed on one page is not limited to four and may be, for example, two, three, or five or more.

The dynamic performance monitor region **132B** is positioned toward the lower side of the sub-region **132**. The dynamic performance monitor region **132B** is sometimes referred to as the "lower region" in the sub-region **132**. Various items showing the various functional performance information described above may be displayed in the dynamic performance monitor region **132B**. The display of information displayed in the dynamic performance monitor region **132B** may be controlled by the control device **400** (e.g., meter ECU) that receives commands from, for example, the vehicle ECU. The control device **400** may be configured to change the display of the dynamic performance monitor region **132B** in response to commands from the vehicle ECU. As illustrated in FIG. **16**, for example, two items may be displayed in the dynamic performance monitor region **132B**. However, the number of items is not limited to two. Nothing may be displayed in the dynamic performance monitor region **132B** as illustrated in FIG. **15**.

The gauge regions **132C** are positioned on the right and left sides of the sub-region **132**. The performance monitor region **132A** and the dynamic performance monitor region **132B** are positioned between the two gauge regions **132C** on the right and left. Gauge images including icons and scales may be displayed in each of the gauge regions **132C** on the right and left sides. Examples of gauge images include information about the remaining amount of diesel exhaust fluid (DEF), particulate matter (PM) accumulation, and tire air pressure.

The images displayed in the performance monitor region **132A** and the dynamic performance monitor region **132B** may be changed according to user operations using the input device. For example, camera images, images for radio or audio settings, images for front loader control, images for cylinder flow control, images for setting operation members, images for steering assist control, images for automatic steering control, images for attachment work machine control, or launcher images displaying a list of functional items may be displayed in a region corresponding to the entire performance monitor region **132A** and dynamic performance monitor region **132B**. By integrating two or more regions and using them as one region in this way, images and content can be displayed relatively large.

The LCD indicator region **133** is positioned above the primary region **131**. The LCD indicator region **133** in the example illustrated in FIG. **16** is a rectangular region like the primary region **131** and the sub-region **132**. The LCD indicator region **133** functions as a region to display information indicating the state of the work vehicle, warning information, maintenance-related information, and the like. For example, indicators that turn on when a warning state such as brake warning or fuel remaining warning should be issued and turn off when the state is resolved may be displayed in the LCD indicator region **133**. As another example, indicators that turn on periodically to prompt the user for maintenance such as DPF regeneration or engine oil change may be displayed in the LCD indicator region **133**. As a further example, indicators to request an increase or decrease in engine speed may be displayed in the LCD indicator region **133**. In the LCD indicator region **133**, no indicators are normally displayed, and a black background is displayed. When a state requiring display of warning or maintenance information arises, the indicator corresponding to that warning or maintenance information turns on. A maximum of, for example, about **10** indicators may be displayed in the LCD indicator region **133**. Since indicators can be displayed prominently against a black background, it is possible to make it easier for the operator or user to notice the occurrence of LCD indicators.

The LCD indicator region **133** is positioned below the indicator region **14T** illustrated in FIG. **5**. The indicators arranged in the indicator region **14T** are hardware indicators that are turned on by light emitting devices such as LEDs. In contrast, the indicators displayed in the LCD indicator region **133** are turned on by drawing processing on the LCD. In this specification, hardware indicators using LEDs are referred to as "LED indicators," and indicators displayed in the LCD indicator region **133** are referred to as "LCD indicators," and the two may be distinguished.

A popup image including a message for notifying the user of the content of an abnormality or failure when, for example, an abnormality or failure of the engine or electrical equipment is detected, or a message for warning about the internal state of the vehicle system (hereinafter sometimes referred to as a "popup image") may also be displayed in the sub-region **132** illustrated in FIG. **16**. In addition, popup images including messages indicating maintenance information may also be displayed in the sub-region **132**.

### <Cooperation between the coupling device and the display>

Next, an example of an information processing system for realizing cooperation between a coupling device for connecting an implement to a work vehicle and a display will be described.

The information display system in the present embodiment includes a digital display and a control device to control the digital display. The digital display may be the display element 13 mounted on the meter panel unit 100 described above, or another display such as the operation terminal 802 illustrated in FIG. 1B. The control device may be configured or programmed to, in response to an operation of an operating tool such as a lever or a switch to adjust a state of the coupling device, cause the digital display to display a setting screen relating to the coupling device. Specific examples of such an information display system will be described below.

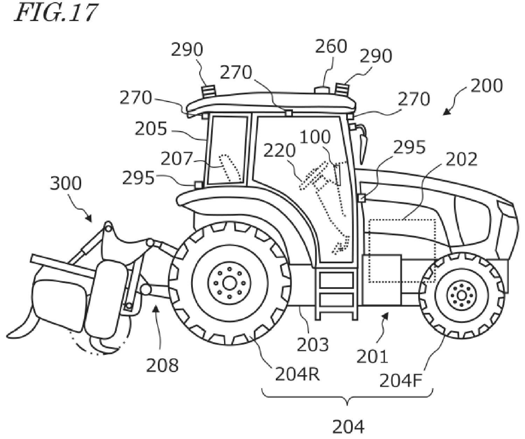

In the following description, as illustrated in FIG. **17**, a case is mainly assumed in which an implement **300** for performing tilling work is connected to the coupling device **208** of the work vehicle **200**. The implement **300** illustrated in FIG. **17** is a rotary tiller, but as described above, the implement **300** may be an implement used for other purposes.

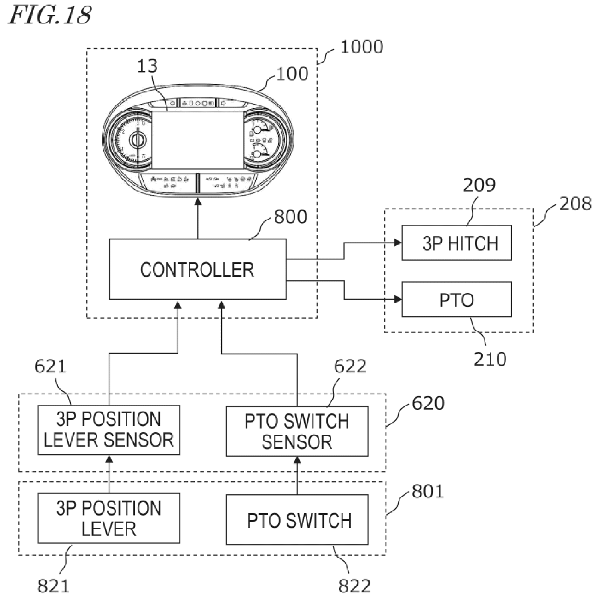

FIG. **18** is a block diagram illustrating an example configuration of the information processing system **1000** in the present embodiment. The information processing system **1000** includes a meter panel unit **100** and a control device **800** configured to control the meter panel unit **100**. The meter panel unit **100** includes the display element **13** functioning as a digital display. In the following description, the display element **13** is also referred to as the "digital display **13**". The control device **800** may control another digital display such as the operation terminal **802**, instead of the meter panel unit **100**, to display various kinds of information described below.

The control device **800** may be, for example, a computing device such as an ECU arranged in the vehicle body of the work vehicle **200**. The control device **800** may be a collection of a plurality of ECUs. The control device **800** may include, for example, a hardware configuration similar to that of the control device **400** exemplified in FIG. **12**. That is, the control device **800** may include one or more processors **434**, one or more memories **435** and **436**, and one or more interfaces **437** and **438**.

In FIG. **18**, in addition to the information display system **1000**, the coupling device **208**, switches **801**, and sensors **620** are also illustrated. The coupling device **208** includes a three-point hitch **209** (hereinafter also referred to as a "3P hitch **209**") for connecting the implement **300**, and a PTO shaft **210** (hereinafter also simply referred to as "PTO **210**") for supplying rotational power to the implement **300**. The switches **801** includes a 3P position lever **821** for performing an operation to change the height of the 3P hitch **209**, and a PTO switch **822** for performing an operation to switch the PTO **210** on/off. The sensors **620** includes a 3P position lever sensor **621** to detect the height position of the 3P position lever **821**, and a PTO switch sensor **622** to detect the on/off state of the PTO switch **822**.

Each of the coupling device **208**, the switches **801**, and the sensors **620** may include other components, but only some components are illustrated in FIG. **18**.

The control device **800** is connected to the meter panel unit **100**, the 3P position lever sensor **621**, the PTO switch sensor **622**, the 3P hitch **209**, and the PTO **210**. The control device **800** can communicate with these components using a communication protocol such as CAN.

The control device **800** illustrated in FIG. **18** controls the display on the digital display **13** by sending a control signal to the meter panel unit **100**. A controller in the meter panel unit **100** (e.g., the main MCU **420** and display MCU **440** illustrated in FIG. **13**) controls the display on the digital display **13** in response to a control signal from the control device **800**. This allows desired information to be displayed on the digital display **13**.

The control device **800** in the present embodiment can, in response to an operation of the 3P position lever **821** that adjusts the height of the 3P hitch **209**, cause the digital display **13** of the meter panel unit **100** to display a setting screen relating to the 3P hitch **209**. The control device **800** can also, in response to an operation of the PTO switch **822** that switches the rotation of the PTO **210** between on and off, cause the digital display **13** to display a setting screen relating to the PTO **210**. This function will be described in more detail below.

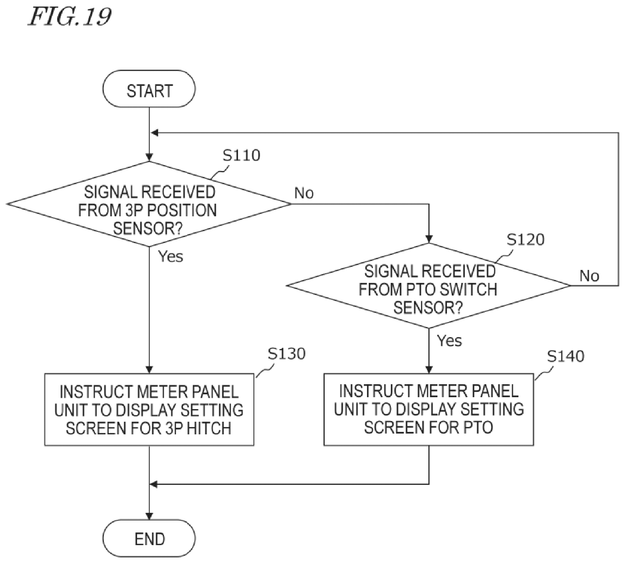

FIG. **19** is a flowchart illustrating an example of an operation by the control device **800**. During operation of the work vehicle **200** and the meter panel unit **100**, the control device **800** executes the operations of steps S**110** to S**140** illustrated in FIG. **19**.

In step S**110**, the control device **800** determines whether a signal indicating that the 3P position lever **821** has been operated has been received from the 3P position lever sensor **621**. When the signal has been received, the process proceeds to step S**130**. When the signal has not been received, the process proceeds to step S**120**.

In step S**120**, the control device **800** determines whether a signal indicating that the PTO switch **822** has been operated has been received from the PTO switch sensor **622**. When the signal has been received, the process proceeds to step S**140**. When the signal has not been received, the process returns to step S**110**. It should be noted that step S**120** may be performed before step S**110**, or may be performed in parallel with step S**110**.

In step S**130**, the control device **800** instructs the meter panel unit **100** to display a setting screen relating to the 3P hitch **209**. The setting screen relating to the 3P hitch **209** may include, for example, a display region for setting the height of the 3P hitch **209** when the implement **300** is in a specific state. For example, the setting screen relating to the 3P hitch **209** may include at least one of the following three display regions:
· A display region for setting the height of the 3P hitch **209** when the implement **300** attached to the 3P hitch **209** is in contact with the ground
· A display region for setting the height of the 3P hitch **209** when the work vehicle **200** performs work using the implement **300** attached to the 3P hitch **209**
· A display region for setting the height of the 3P hitch **209** when the implement **300** is attached to or detached from the 3P hitch **209**

The control device **800** may also cause information indicating the current height of the 3P hitch **209** to be displayed in the setting screen. By displaying the current height of the 3P hitch **209**, the user can make various settings relating to the height of the 3P hitch **209** while confirming the current height of the 3P hitch **209**.

In step S**140**, the control device **800** instructs the meter panel unit **100** to display a setting screen relating to the PTO **210**. The setting screen relating to the PTO **210** may include, for example, at least one of the following three display regions:
· A display region for setting a first height in a function of automatically turning off the PTO shaft when the height of the three-point hitch exceeds the first height when the work vehicle turns while the PTO shaft is on
· A display region for setting a second height in a function of automatically turning on the PTO shaft when the height of the three-point hitch falls below the second height when the work vehicle is turning while the PTO shaft is off
· A display region for setting a rotation speed of the PTO shaft when the PTO shaft is on

Some specific examples of these displays will be described below.

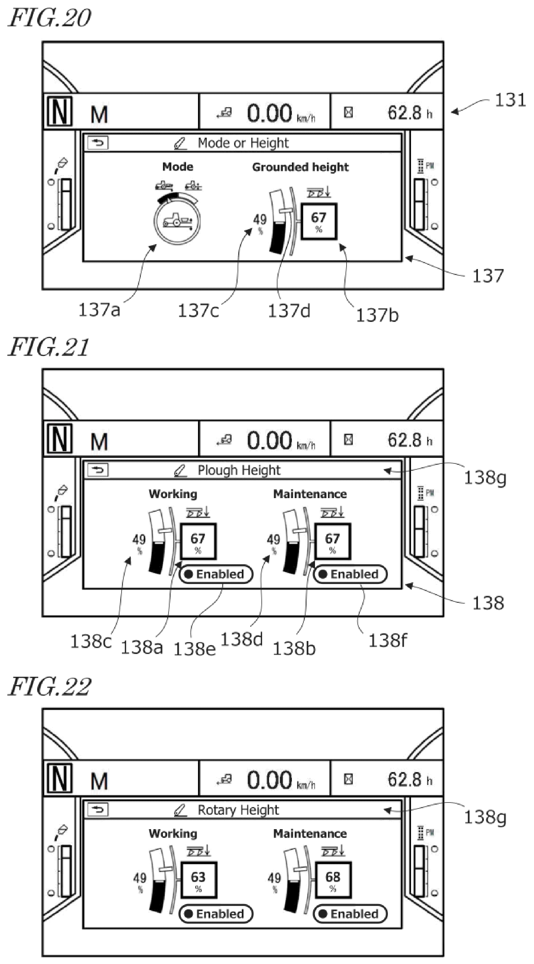

FIG. **20** is a diagram illustrating an example of a setting screen that may be displayed in step S**130**. The setting screen **137** in this example is displayed in a sub-region (second region) below the primary region **131** (first region). The primary region **131** is a band-shaped region extending in the horizontal direction, and displays information relating to a travel state including a gear stage and a travel speed of the work vehicle **200**. Other information different from the information relating to the travel state may also be displayed in the sub-region, for example as illustrated in FIG. **16**. The control device **800**, in response to an operation of an operating tool such as the 3P position lever **821** or the PTO switch **822**, causes the setting screen **137** to be displayed in the sub-region while maintaining display in the primary region **131**.

The setting screen **137** illustrated in FIG. **20** includes a display region **137a** for setting the mode of the 3P hitch **209**, and a display region **137b** for setting the height (grounded height) of the 3P hitch **209** when the implement **300** is in contact with the ground. The setting screen **137** also includes a display region **137c** to display information indicating the current height of the 3P hitch **209**.

The mode of the 3P hitch **209** may include, for example, a position mode for attaching and detaching the implement **300**, and a draft mode for performing work by towing the implement **300**. In the display region **137a**, the user can select one mode from among a plurality of modes relating to the implement **300**.

In the display region **137b**, the user can set the height of the 3P hitch **209** when the implement **300** is in contact with the ground. The height of the 3P hitch **209** may be expressed, for example, as a percentage where the lowest position in the range of motion of the 3P hitch **209** is 0% and the highest position is 100%. In this case, the height when the 3P hitch **209** is at the center of its range of motion is expressed as 50%. In the example of FIG. **20**, the value "67%" is entered as the height of the 3P hitch **209** when the implement **300** is in contact with the ground. The user can change or confirm this height value by operating the input device **170**. In the example of FIG. **20**, a mark **137d** indicating the set value of the height is also displayed. When the numerical value in the display region **137b** is changed, the position of the mark **137d** moves up and down along an arc-shaped gauge according to the value.

In the example of FIG. **20**, the numerical value "49%" indicating the current height of the 3P hitch **209** is displayed in the display region **137c**. This numerical value is calculated based on a signal output from the 3P position lever sensor **621**. When the user operates the 3P position lever **821**, the height of the 3P hitch **209** changes. The control device **800** transmits to the meter panel unit **100** a command to change the numerical value in the display region **137c** in conjunction with the change in the height of the 3P hitch **209**. The meter panel unit **100** changes the numerical value in the display region **137c** in response to this command. The meter panel unit **100** may also move a mark indicating the current value up and down along the arc-shaped gauge in conjunction with the change in the numerical value. This enables the user to set the height of the 3P hitch **209** when the implement **300** is in contact with the ground while confirming the current height of the 3P hitch **209**.

FIG. **21** is a diagram illustrating another example of a setting screen that may be displayed in step S**130**. The setting screen **138** in this example includes a display region **138a** for setting the height of the 3P hitch **209** when the work vehicle **200** performs work using the implement **300** attached to the 3P hitch **209**, and a display region **138b** for setting the height of the 3P hitch **209** when the implement **300** is attached to or detached from the 3P hitch **209** (for maintenance). The user can change and set the numerical values in each of the display regions **138a** and **138b** using the input device **170**. FIG. **21** shows a state in which the numerical values in the display regions **138a** and **138b** are the same, but in practice, different values may be set. For example, in the case in which the implement **300** is a machine for tilling, the height during work may be set to a lower value than the height during maintenance.

In this way, the setting screen **138** includes a first display region **138a** for setting the height of the coupling device (3P hitch **209**) during work, and a second display region **138b** for setting the height of the coupling device when attachment or detachment of the implement **300** is performed. The setting screen **138** illustrated in FIG. **21** further includes a first button **138e** to activate a setting in the first display region **138a**, and a second button **138f** to activate a setting in the second display region **138b**. The control device **800**, in response to an operation of selecting the first button **138e**, causes the height of the coupling device to become the height set in the first display region **138a**. The control device **800** also, in response to an operation of selecting the second button **138f**, causes the height of the coupling device to become the height set in the second display region **138b**.

In the example of FIG. **21** as well, the setting screen **138** includes display regions **138c** and **138d** to display numerical values indicating the current height of the 3P hitch **209**. The control device **800** changes the numerical values in the display regions **138c** and **138d** in conjunction with changes in the actual height of the 3P hitch **209**. This enables the user to set the heights of the 3P hitch **209** for work and maintenance respectively while confirming the current height of the 3P hitch **209**. It should be noted that in the example of FIG. **21**, the current height of the 3P hitch **209** is displayed in two display regions **138c** and **138d**, but information indicating the current height of the 3P hitch **209** may be displayed in one display region.

In the example of FIG. **21**, buttons **138e** and **138f** to activate settings are also displayed in the vicinity of the display regions **138a** and **138b** for setting the height of the 3P hitch **209**. The control device **800**, in response to an operation by the user to select the button **138e** or **138f**, controls the 3P hitch **209** to change the height of the 3P hitch **209** to the set height. This function may be implemented not only in the example illustrated in FIG. **21** but also in the example illustrated in FIG. **20**.

In this way, in the example of FIG. **21**, the control device **800** causes the digital display **13** to display the setting screen **138** including one or more display regions **138a** and **138b** for setting the height of the 3P hitch **209** in specific situations such as during work or maintenance, and one or more buttons **138e** and **138f** to activate the respective settings. The control device **800**, in response to an operation by the user to select the button **138e** or **138f**, controls the 3P hitch **209** to change the height of the 3P hitch **209** to the set height. This allows the user to easily change the height of the 3P hitch **209** to the set height without operating the position lever **821** or an external operation switch at the rear of the vehicle body of the work vehicle **200**.

When changing the height of the 3P hitch **209** in response to an operation to select the button **138e** or **138f**, the control device **800** may move the 3P hitch **209** more slowly than when changing the height of the 3P hitch **209** in response to an operation of the position lever **821** or an external operation switch by the user. In particular, the control device **800** may set the movement speed of the 3P hitch **209** lower than in other cases when the button **138f** that changes the height of the 3P hitch **209** to the set value when the attachment and detachment work (maintenance) of the implement **300** is performed is selected.

The height values to be set in the display regions **138a** and **138b** may differ depending on the type of implement **300**. Therefore, the control device **800** may cause the digital display **13** to display the setting screen **138** as illustrated in FIG. **21** for each type of implement **300**. For example, the setting screens **138** corresponding to a plurality of types of implements **300** may be switched by a scroll operation using the input device **170** or an operation to select a page advance button.

FIG. **22** is a diagram illustrating an example of a setting screen corresponding to a different type of implement **300** from FIG. **21**. The layout of the setting screen illustrated in FIG. **22** is the same as the layout of the setting screen **138** illustrated in FIG. **21**, but the heading in the display region **138g** differs from the example of FIG. **21**. In the example of FIG. **21**, "Plough Height" is written in the display region **138g**, indicating that it is a setting screen for the height of a plough. On the other hand, in the example of FIG. **22**, "Rotary Height" is written in the display region **138g**, indicating that it is a setting screen for the height of a rotary. Similar setting screens may also be displayed for implements other than a plough and rotary. In this way, the control device **800** may cause the digital display **13** to display, for each type of implement, a setting screen including a graphical user interface (GUI) that, in response to an operation to select a button, changes the height of the 3P hitch **209** to the set height. The control device **800** may be configured to store the height of the implement set in each setting screen in memory, and in each setting screen, in response to an operation to select a button, change the height of the 3P hitch **209** to the set height.

The setting screens illustrated in FIGS. **20** to **22** may be configured to switch among one another by a scroll or page advance operation performed by the user using the input device **170**. The setting screens relating to the 3P hitch **209** are not limited to those exemplified in FIGS. **20** to **22**, and may be arbitrarily designed.

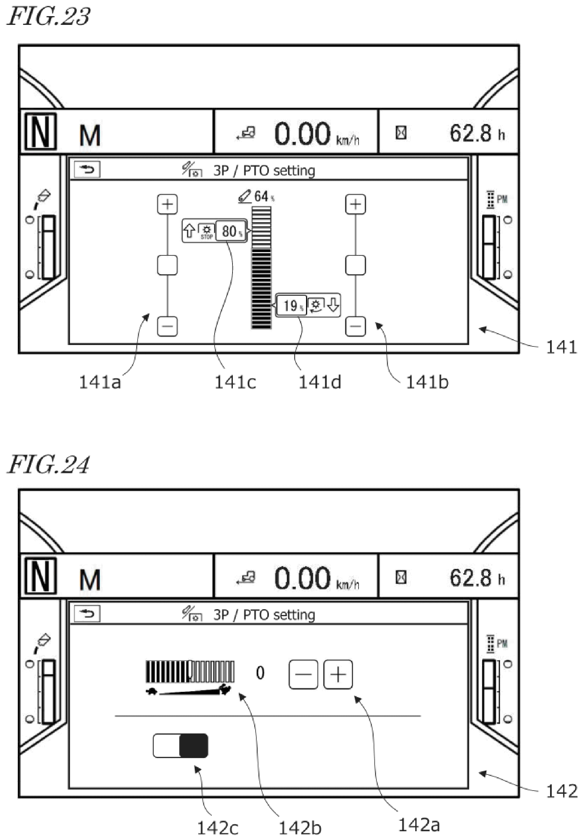

FIG. **23** is a diagram illustrating an example of a setting screen that may be displayed in step S**140**. The control device **800** in this example has a function of automatically turning off the PTO **210** when the height of the 3P hitch **209** exceeds a first height when the work vehicle **200** turns while the PTO **210** is on. The control device **800** also has a function of automatically turning on the PTO shaft when the height of the three-point hitch falls below a second height when the work vehicle **200** is turning while the PTO **210** is off. With such functions, the user no longer needs to perform on/off operations of the PTO **210** when the work vehicle **200** turns, thereby reducing the driving burden during turning. The setting screen **141** illustrated in FIG. **23** includes a first display region **141a** for setting the first height **141c**, and a second display region **141b** for setting the second height **141d**. The user can change the numerical value of the first height **141c** by selecting the "+" or "-" display in the first display region **141a**. The user can also change the numerical value of the second height **141d** by selecting the "+" or "-" display in the second display region **141b**. The setting screen **141** illustrated in FIG. **23** may be displayed both when the PTO **210** is turned on and when it is turned off.

FIG. **24** is a diagram illustrating another example of a setting screen that may be displayed in step S**140**. The setting screen **142** in this example includes a display region **142a** for setting the rotation speed of the PTO **210** when the PTO **210** is on. When the user selects the "+" or "-" display in the display region **142a**, a gauge indicating the rotation speed of the PTO **210** moves left or right, allowing the user to confirm the set value. The user can activate the setting by operating the input device **170** and selecting a display region **142c** simulating a switch. The setting screen **142** illustrated in FIG. **24** may be displayed when the PTO **210** is turned on.

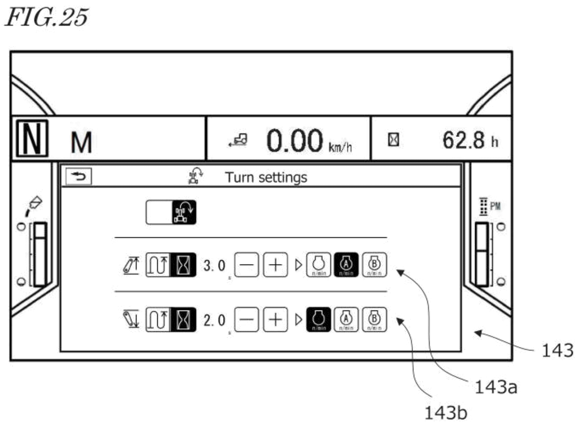

FIG. **25** is a diagram illustrating still another example of a setting screen that may be displayed in step S**140**. The control device **800** in this example has a function of setting the engine speed to a first rotation speed stored in memory when the height of the 3P hitch **209** exceeds a third height when the work vehicle **200** is turning. The control device **800** also has a function of setting the engine speed to a second rotation speed stored in memory when the height of the 3P hitch **209** falls below a fourth height when the work vehicle **200** is turning. The engine speed is the rotational speed per unit time and may be expressed, for example, as the number of rotations per minute (unit: rpm). With this function, the user no longer needs to manually decrease or increase the engine speed when the work vehicle **200** turns, thereby reducing the driving burden during turning. The setting screen **143** illustrated in FIG. **25** includes a third display region **143a** for setting the third height, and a fourth display region **143b** for setting the fourth height. The user can change the numerical value of the third height by selecting the "+" or "-" display in the third display region **143a**. The user can also change the numerical value of the fourth height by selecting the "+" or "-" display in the fourth display region **143b**. The setting screen **143** illustrated in FIG. **25** may be displayed when the PTO **210** is turned on, or may be displayed when the PTO **210** is turned off.

The setting screens illustrated in FIGS. **23** to **25** may be configured to switch among one another by a scroll or page advance operation performed by the user using the input device **170**. The setting screens relating to the PTO **210** are not limited to those exemplified in FIGS. **23** to **25**, and may be arbitrarily designed.

In the operation illustrated in FIG. **19**, the same screen that would normally be displayed by operating the input device **170** such as the jog dial illustrated in FIG. **15** is immediately displayed by an operation of an operating tool such as the 3P position lever **821** or the PTO switch **822**. Therefore, the user can make desired settings more quickly than when using the input device **170**.

For reference, an example of the procedure to display a setting screen relating to the 3P hitch 209 or the PTO 210 using the input device 170 will be described.

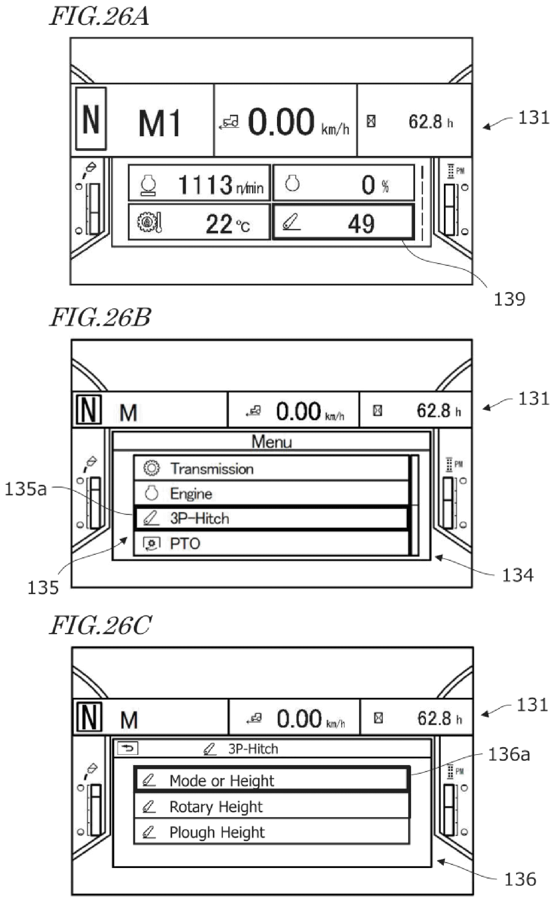

FIG. **26A** illustrates an example of a home screen displayed on the digital display **13**. FIG. **26B** illustrates an example of a menu screen displayed on the digital display **13**. FIG. **26C** illustrates an example of a submenu screen on which a list of setting items relating to the 3P hitch **209** is displayed.

From the home screen illustrated in FIG. **26A**, when the user presses a menu switch included in the operation switch **172** of the input device **170**, a menu screen **134** illustrated in FIG. **26B** is displayed.

The menu screen **134** has a GUI for setting each of a plurality of setting items relating to the operation of the work vehicle **200**. The menu screen **134** is displayed below the primary region **131**. In the example of FIG. **26B**, when the menu screen **134** is displayed, the vertical width of the primary region **131** decreases. As a result, the menu screen **134** is displayed broadly in the enlarged lower region.

On the menu screen **134**, a list **135** of a plurality of categories classified for each device or function included in the work vehicle **200** is displayed. For example, a list **135** of categories such as transmission, engine, 3P hitch, and PTO may be displayed. The user can select one category from among a plurality of categories included in the list **135** by operating the selector switch **171** of the input device **170**. For example, when the user operates the selector switch **171** to place a cursor on one category and presses a confirm (enter) button, the screen transitions to a submenu screen that displays a list of a plurality of setting items included in that category. In the example of FIG. **26B**, the "3P-Hitch" category **135a** is selected from among the plurality of categories. When the confirm button is pressed in this state, a submenu screen **136** illustrated in FIG. **26C**, for example, may be displayed.

The submenu screen **136** illustrated in FIG. **26C** displays a list of setting items relating to the 3P hitch **209**. For example, a list of a plurality of setting items including the three setting items exemplified in FIGS. **20** to **22** may be displayed. The user can select one item from among a plurality of items included in the list by operating the selector switch **171** of the input device **170**. For example, when the user operates the selector switch **171** to place a cursor on one item and presses the enter button, the screen transitions to a setting screen for setting that item. In the example of FIG. **26C**, the "Mode or Height" item **136a** is selected from among the plurality of items. When the enter button is pressed in this state, for example, the setting screen **137** illustrated in FIG. **20** is displayed. When another item is selected and the confirm button is pressed, another setting screen corresponding to the selected item is displayed.

In this example, from the menu screen illustrated in FIG. 26B, the user transitions to the desired setting screen through two levels of screen transitions. In this case, the user can make the setting for the desired item through two selections. Not limited to such an example, there are also items for which the user transitions to the desired setting screen through three or more levels of screen transitions. In that case, the user can make the setting for the desired item through three or more selections. It should be noted that among the categories in the menu screen 134, there may also be categories that do not have a submenu screen and transition to the setting screen in one selection from the menu screen 134.

The GUI providing such menu selection functionality allows the user to comprehensively set all setting items of the work vehicle **200**. However, since multiple selections are required to reach the setting screen for the desired item, the setting cannot be completed quickly. To solve this problem, a shortcut function is provided for some setting items that transitions to the desired setting screen in one selection. For example, in the example of FIG. **26A**, the shortcut function is provided for four setting items displayed in the performance monitor region below the primary region **131**. For example, when the user selects a region **139** corresponding to the setting item relating to the 3P hitch **209** at the lower right, a setting screen relating to the 3P hitch **209** (e.g., the setting screen **137** illustrated in FIG. **20**) may be displayed.

In the present embodiment, separately from such a shortcut function, a setting screen relating to an operating tool is also displayed when the user operates the operating tool (e.g., a lever, pedal, button, or other switch) to adjust the state of the coupling device. The control device **800** may be configured to cause the digital display **13** to display, in an interrupt manner, a setting screen relating to the operating tool in response to an operation of the operating tool, regardless of which screen the digital display **13** is displaying. For example, interrupt display may be performed regardless of whether a home screen as illustrated in FIG. **26A**, a menu screen as illustrated in FIG. **26B**, or a submenu screen as illustrated in FIG. **26C** is being displayed. This enables the user to make settings for functions relating to an operation using an operating tool such as a lever without operating the input device **170**. The setting items for which such interrupt display is performed are not limited to those relating to the 3P hitch **209** or the PTO shaft **210** described above, and can be arbitrarily designed. The controller of the control device **800** or the meter panel unit **100** may allow the user to set which setting items have the interrupt display function enabled when an operation using a certain operating tool is performed. In addition, the user may be allowed to set whether to enable or disable the interrupt display function itself.

The meter panel or information display systems in the above embodiments can also be retrofitted to work vehicles that do not have these functions. Such systems may be manufactured and sold independently of work vehicles. Computer programs used in such systems may also be manufactured and sold independently of work vehicles. Computer programs may be provided, for example, stored on non-transitory computer-readable storage media. Computer programs may also be provided by download via telecommunication lines (e.g., the Internet).

### INDUSTRIAL APPLICABILITY

The technologies of the present disclosure are widely applicable to various types of work vehicles used in, for example, smart agriculture.

### REFERENCE SIGNS LIST

**10**...meter portion, **11**...first analog meter, **12**...second analog meter, **13**...display element, **14T**...indicator region, **14L**...indicator region, **14R**...indicator region, **17**...raised scale, **20**...wall surface portion, **30**...transparent cover, **30A**...front surface section of transparent cover, **30B**...side surface section of transparent cover, **40**...arc-shaped indicator, **50**...facing plate, **100**...meter panel unit, **140**...hardware indicators, **208**...coupling device, **209**...three-point hitch, **210**...PTO shaft, **400**...control device, **420**...main MCU, **424**...CPU, **425**...ROM, **426**...RAM, **443**...GPU, **444**...CPU, **445**...ROM, **446**...RAM, **440**...display MCU, **500**...information display system, **620**...sensors, **621**...3P position lever sensor, **622**...PTO switch sensor, **800**...control device, **801**... switches, **821**...3P position lever, **822**...PTO switch, **1000**...information processing system

## Claims

1. An information display system for a work vehicle including a coupling device to connect an implement, the information display system comprising:
a digital display; and
a control device configured to control the digital display;
wherein the control device is configured to cause the digital display to display a setting screen relating to the coupling device in response to an operation of an operating tool to adjust a state of the coupling device.

2. The information display system of claim 1, wherein
the coupling device includes a three-point hitch, and
the control device is configured to cause the digital display to display a setting screen relating to the three-point hitch in response to an operation of an operating tool to adjust a height of the three-point hitch.

3. The information display system of claim 1, wherein
the coupling device includes a PTO shaft, and
the control device is configured to cause the digital display to display a setting screen relating to the PTO shaft in response to an operation of an operating tool to switch rotation of the PTO shaft between on and off.

4. The information display system of claim 2, wherein the setting screen includes a display region for setting a height of the three-point hitch when an implement attached to the three-point hitch is in contact with the ground.

5. The information display system of claim 2, wherein the setting screen includes a display region for setting a height of the three-point hitch when the work vehicle performs work using an implement attached to the three-point hitch.

6. The information display system of claim 2, wherein the setting screen includes a display region for setting a height of the three-point hitch when an implement is attached to or detached from the three-point hitch.

7. The information display system of claim 2, wherein the control device is further configured to cause information indicating a current height of the three-point hitch to be displayed in the setting screen.

8. The information display system of claim 2, wherein
the coupling device includes a PTO shaft, and
the setting screen includes a display region for setting at least one of: a first height in a function of automatically turning off the PTO shaft when the height of the three-point hitch exceeds the first height when the work vehicle turns while the PTO shaft is on; or a second height in a function of automatically turning on the PTO shaft when the height of the three-point hitch falls below the second height when the work vehicle is turning while the PTO shaft is off.

9. The information display system of claim 3, wherein the setting screen includes a display region for setting a rotation speed of the PTO shaft when the PTO shaft is on.

10. An information display system for a work vehicle including a coupling device to connect an implement, the information display system comprising:
a digital display; and
a control device configured to control the digital display and the coupling device;
wherein the control device is configured to:
cause the digital display to display a setting screen including a display region for setting a height of the coupling device and a button to activate the setting; and
cause the height of the coupling device to become the set height in response to an operation of selecting the button.

11. The information display system of claim 10, wherein the control device is configured to:
cause the digital display to display a corresponding setting screen for each of a plurality of types of implements;
store the height of the implement set in each of the setting screens; and
in each setting screen cause the height of the coupling device to become the set height in response to an operation of selecting the button.

12. The information display system of claim 10, wherein
the setting screen includes a first display region for setting a height of the coupling device during work, a first button to activate a setting in the first display region, a second display region for setting a height of the coupling device when the implement is attached to or detached from the coupling device, and a second button to activate a setting in the second display region; and
the control device is configured to cause the height of the coupling device to become the height set in the first display region in response to an operation of selecting the first button, and cause the height of the coupling device to become the height set in the second display region in response to an operation of selecting the second button.

13. The information display system of claim 10, wherein the control device is further configured to cause information indicating a current height of the coupling device to be displayed in the setting screen.

14. The information display system of claim 10, wherein the coupling device is a three-point hitch.

15. The information display system of any one of claims 1 to 14, wherein the control device is configured to:
cause information relating to a travel state including a gear stage and a travel speed of the work vehicle to be displayed in a first region of the digital display;
cause other information different from the information relating to the travel state to be displayed in a second region of the digital display; and
cause the setting screen to be displayed in the second region while maintaining display in the first region in response to an operation of an operating tool to adjust a state of the coupling device.

16. The information display system of claim 15, wherein the first region is a band-shaped region extending in a horizontal direction, and the second region is positioned below the first region.

17. The information display system of any one of claims 1 to 14, further comprising a meter panel unit including the digital display and one or more analog meters.

18. A work vehicle comprising the information display system of any one of claims 1 to 14.
